# EUROPEAN PATENT APPLICATION

(11) **EP 4 808 074 A1**
(43) Date of publication of application: **16.09.2026**
(21) Application number: 24896292.0
(22) Date of filing: 15.11.2024
(51) Int. Cl.: H04L 47/24

(54) **DELAY CONTROL METHOD AND RELATED APPARATUS**

(30) Priority: 30.11.2023 CN 202311634372
(71) Applicant: Huawei Technologies Co., Ltd., Shenzhen, Guangdong 518129 (CN)
(72) Inventor: ZANG, Xin, Shenzhen, Guangdong 518129 (CN); MA, Jingwang, Shenzhen, Guangdong 518129 (CN); ZHOU, Runze, Shenzhen, Guangdong 518129 (CN); ZHOU, Yu, Shenzhen, Guangdong 518129 (CN)
(74) Representative: Gill Jennings & Every LLP
(86) International application number: PCT/CN2024/132296
(87) International publication number: WO 2025/113201

(57) **Abstract**

Embodiments of this application provide a delay control method and a related apparatus. The method includes: receiving first information sent by an application server, where the first information indicates an end-to-end transmission delay requirement for a first data flow, and the end-to-end transmission delay requirement is a transmission delay requirement for data transmission between a first terminal device and a second terminal device; and generating a policy and charging control PCC rule based on the first information, where the PCC rule indicates an uplink transmission delay requirement for the first data flow from the first terminal device to a first user plane function network element and/or a downlink transmission delay requirement for the first data flow from a second user plane function network element to the second terminal device. By configuring the end-to-end delay requirement for the first data flow, end-to-end delay guarantee between the terminal devices is implemented, various service requirements are met, and communication quality is improved.

## Description

This application claims priority to Chinese Patent Application No. 202311634372.5, filed with the China National Intellectual Property Administration on November 30, 2023 and entitled "DELAY CONTROL METHOD AND RELATED APPARATUS", which is incorporated herein by reference in its entirety.

### TECHNICAL FIELD

This application relates to the communication field, and in particular, to a delay control method and a related apparatus.

### BACKGROUND

In a current quality of service (quality of service, QoS) model, after receiving packets, a user plane function network element (user plane function, UPF) maps, according to a packet detection rule (packet forwarding model, PDR), the packets (packets) into a same QoS flow for transmission. Each QoS flow is associated with a QoS profile (profile), and the QoS profile includes a QoS-related parameter, for example, a packet delay budget (packet delay budget, PDB). The PDB is an upper time limit for transmitting a packet between the UPF and a terminal device.

With the development of 5th-generation mobile communication (5th-generation, 5G) technologies, media services increase exponentially. With the evolution of services, media services such as high-definition video and extended reality (extended reality, XR) services emerge. In such emerging media service services, there may be a service requirement for exchanging data between a plurality of terminal devices. For example, in the XR media service, a plurality of users corresponding to a plurality of terminal devices need to play a game at the same time, and therefore, the plurality of terminal devices need to exchange game-related data with each other.

Since delay control in the current QoS model focuses only on transmission between the UPF and the terminal device, how to control an end-to-end transmission delay between terminal devices becomes an urgent technical problem to be resolved.

### SUMMARY

According to a first aspect, an embodiment of this application proposes a delay control method. The method is applied to a policy control function network element, and the method includes:
receiving first information sent by an application server, where the first information indicates an end-to-end transmission delay requirement for a first data flow, and the end-to-end transmission delay requirement is a transmission delay requirement for data transmission between a first terminal device and a second terminal device; and
generating a policy and charging control PCC rule based on the first information, where the PCC rule indicates a QoS requirement of a first quality of service QoS flow and/or a QoS requirement for a second QoS flow, the QoS requirement of the first QoS flow includes an uplink transmission delay requirement for the first data flow from the first terminal device to a first user plane function network element, and the QoS requirement for the second QoS flow includes a downlink transmission delay requirement for the first data flow from a second user plane function network element to the second terminal device.

It should be noted that the first user plane function network element and the second user plane function network element may be a same user plane function network element, or may be different user plane function network elements. The first user plane function network element is a user plane function network element serving the first terminal device, and the second user plane function network element is a user plane function network element serving the second terminal device.

It should be noted that when a network includes a first session management function network element and a second session management function network element, the first session management function network element is a session management function network element of the first terminal device, and the second session management function network element is a session management function network element of the second terminal device. The policy control function network element may send a first PCC rule to the first session management function network element, and the first PCC rule indicates the QoS requirement for the first QoS flow. The policy control function network element may send a second PCC rule to the second session management function network element, and the second PCC rule indicates the QoS requirement for the second QoS flow.

In this embodiment of this application, the policy management function network element generates the PCC rule based on the end-to-end delay requirement for the first data flow that is configured by the application server. The PCC rule indicates the uplink transmission delay requirement for the first data flow and/or the downlink transmission delay requirement for the first data flow. In this way, each network element or device in an uplink direction of the first data flow in the network performs delay guarantee for a packet of the first data flow according to the PCC rule, and each network element or device in a downlink direction of the first data flow in the network performs delay guarantee for the packet of the first data flow according to the PCC rule. Through collaboration between network elements or devices, end-to-end delay guarantee between the terminal devices is implemented, various service requirements are met, and communication quality is improved.

With reference to the first aspect, in a possible implementation of the first aspect, the PCC rule includes first indication information. The first indication information indicates the first terminal device to add, to a packet of the first data flow, first time information of the packet. The first time information indicates time at which the first terminal device generates or sends the packet.

In an example, the first terminal device adds, based on the first indication information, first time information to a packet transmitted in the first QoS flow, and the first time information indicates time at which the first terminal device generates or sends the packet.

Optionally, the first indication information further indicates the user plane function network element to add first time information to a packet of the first data flow. Specifically, the user plane function network element extracts the first time information from the packet of the first data flow based on the first indication information. Then, the user plane function network element re-adds the first time information to the packet, for example, adds the first time information to a general packet radio service tunneling protocol-user plane (general packet radio service tunneling protocol-user plane, GTP-U) packet header of the packet. The user plane function network element forwards, to the second terminal device through the first data flow, the packet of the first data flow to whose GTP-U packet header the first time information is added.

Optionally, the first indication information further indicates an access network device to send a packet of the first data flow to the second terminal device within a sending delay budget for the packet. Specifically, the access network device sends the packet of the first data flow to the second terminal device within the sending delay budget for the packet based on the first indication information.

In this embodiment of this application, the network elements or devices are indicated by using the explicit first indication information to provide an end-to-end delay guarantee service for the first data flow, thereby improving communication quality.

With reference to the first aspect, in a possible implementation of the first aspect, the PCC rule further includes an end-to-end transmission delay budget for the first data flow, and the end-to-end transmission delay budget is a transmission delay budget for data transmission between the first terminal device and the second terminal device. The PCC rule may further include the end-to-end transmission delay budget for the first data flow, thereby improving implementation flexibility of the solution.

With reference to the first aspect, in a possible implementation of the first aspect, the end-to-end transmission delay requirement for the first data flow includes the uplink transmission delay requirement for the first data flow from the first terminal device to the first user plane function network element and the downlink transmission delay requirement for the first data flow from the second user plane function network element to the second terminal device, thereby improving implementation flexibility of the solution.

With reference to the first aspect, in a possible implementation of the first aspect, a sum of the uplink transmission delay requirement and the downlink transmission delay requirement is less than or equal to the end-to-end transmission delay requirement. By limiting the sum of the uplink transmission delay requirement and the downlink transmission delay requirement to being less than or equal to the end-to-end transmission delay requirement, it is ensured that end-to-end transmission of a packet of the first data flow is implemented within a specified transmission delay requirement, and communication quality is improved. For example, a sum of the uplink transmission delay requirement, a first transmission delay value, the downlink transmission delay requirement, and a second transmission delay value is less than or equal to the end-to-end transmission delay requirement.

With reference to the first aspect, in a possible implementation of the first aspect, the generating the policy and charging control PCC rule based on the first information includes: obtaining a first transmission delay value from the application server to the first user plane function network element and/or a second transmission delay value from the application server to the second user plane function network element; and determining the QoS requirement for the first QoS flow and/or the QoS requirement for the second QoS flow based on the first information and the first transmission delay value and/or the second transmission delay value. In the process of generating the PCC rule, a transmission delay value between the application server and the user plane function network element, for example, an N6 transmission delay value, may be further considered, to further improve precision of the end-to-end delay guarantee service and improve communication quality.

With reference to the first aspect, in a possible implementation of the first aspect, the generating the PCC rule based on the first information includes: generating a first PCC rule based on the first information, where the first PCC rule indicates the QoS requirement for the first QoS flow; and generating a second PCC rule based on the first information, where the second PCC rule indicates the QoS requirement for the second QoS flow.

Optionally, a same policy management function network element may generate a plurality of PCC rules, or different policy management function network elements may generate different PCC rules. In this embodiment of this application, alternatively, when the network includes a plurality of policy management function network elements, a plurality of PCC rules related to the end-to-end transmission delay requirement for the first data flow may be generated through negotiation, thereby improving implementation flexibility of the solution, and meeting requirements of different services.

With reference to the first aspect, in a possible implementation of the first aspect, the method further includes: sending a first subscription request, where the first subscription request is used to request provision of a first notification service, and the first notification service is sending a first notification message when a transmission delay of the first data flow is greater than or equal to a first threshold; receiving the first notification message, where the first notification message indicates that the transmission delay of the first data flow is greater than or equal to the first threshold; and updating the uplink transmission delay requirement for the first data flow and/or the downlink transmission delay requirement for the first data flow based on the first notification message.

In this embodiment of this application, the policy management function network element may send the first subscription request to the application server, and may send the first subscription request to the user plane function network element, thereby improving implementation flexibility of the solution. The first notification message may be used to notify that the transmission delay of the first data flow is greater than or equal to the first threshold.

With reference to the first aspect, in a possible implementation of the first aspect, the uplink transmission delay requirement for the first data flow and/or the downlink transmission delay requirement for the first data flow are/is updated based on the first notification message. Optionally, the first notification message may include second indication information, and the second indication information indicates the policy management function network element to update the uplink transmission delay requirement for the first data flow and/or the downlink transmission delay requirement for the first data flow, thereby improving implementation flexibility of the solution.

With reference to the first aspect, in a possible implementation of the first aspect, the method further includes: determining a target transmission delay requirement combination from a transmission delay requirement set, where the transmission delay requirement set includes one or more transmission delay requirement combinations, and each transmission delay requirement combination includes the uplink transmission delay requirement and/or the downlink transmission delay requirement; and updating the uplink transmission delay requirement for the first data flow and/or the downlink transmission delay requirement for the first data flow based on the target transmission delay requirement combination.

In this embodiment of this application, after receiving the first information, the policy management function network element generates the PCC rule based on the end-to-end transmission delay requirement for the first data flow, and then generates the transmission delay requirement set according to the PCC rule. The application server determines a remaining available transmission time of a first packet based on first time information and/or second time information, and then determines a target transmission delay requirement combination from the transmission delay requirement set based on the remaining available transmission time of the first packet, to improve delay guarantee performance, ensure normal service running, and improve communication quality.

With reference to the first aspect, in a possible implementation of the first aspect, the method further includes: sending the transmission delay requirement set, where the transmission delay requirement set includes one or more transmission delay requirement combinations, and each transmission delay requirement combination includes the uplink transmission delay requirement and/or the downlink transmission delay requirement; receiving a second notification message, where the second notification message indicates a target transmission delay requirement combination, and the target transmission delay requirement combination belongs to the one or more transmission delay requirement combinations included in the transmission delay requirement set; and updating the uplink transmission delay requirement for the first data flow and/or the downlink transmission delay requirement for the first data flow based on the second notification message.

Optionally, the policy management function network element sends a second subscription request to the application server. The second subscription request is used to request the application server to provide a second notification service. The second notification service is sending, by the application server, the second notification message after determining the target transmission delay requirement from the transmission delay requirement set.

In a possible implementation, the policy management function network element includes the transmission delay requirement set into the second subscription request.

In another possible implementation, after receiving the first information sent by the application server, the policy management function network element generates the transmission delay requirement set based on the first information. Then, the policy management function network element sends the transmission delay requirement set to the application server.

With reference to the first aspect, in a possible implementation of the first aspect, the method further includes: updating the QoS requirement for the first QoS flow and/or the QoS requirement for the second QoS flow based on an updated uplink transmission delay requirement for the first data flow and/or an updated downlink transmission delay requirement for the first data flow. After updating the uplink transmission delay requirement for the first data flow and/or the downlink transmission delay requirement for the first data flow, the policy management function network element may update the PCC rule in time. Specifically, the policy management function network element updates the QoS requirement for the first QoS flow and/or the QoS requirement for the second QoS flow that are/is indicated by the PCC rule, to ensure that the transmission delay requirement applied to the delay guarantee service is adjusted in time, and improve communication quality.

With reference to the first aspect, in a possible implementation of the first aspect, the first subscription request further includes: description information of the first data flow and/or the first threshold. The description information of the first data flow includes any one or more pieces of the following information: a source internet protocol IP address of the first data flow, a destination IP address of the first data flow, a source port of the first data flow, a destination port of the first data flow, transport layer protocol information of the first data flow, a queue pair of the first data flow, a service type of the first data flow, or a port index of the first data flow.

With reference to the first aspect, in a possible implementation of the first aspect, the method further includes: obtaining time at which the first terminal device sends or generates a first packet, where the first packet belongs to the first data flow; and updating the second PCC rule based on the time at which the first terminal device sends or generates the first packet. Alternatively, the policy control function network element may further obtain time at which the first user plane function network element receives or sends the first packet or time at which the application server receives or sends the first packet, and update the PCC rule. In this embodiment of this application, the policy management function network element may update the PCC rule in time based on an actual transmission status of a packet in the first data flow to adjust, in time, the transmission delay requirement applied to the delay guarantee service, thereby improving communication quality.

According to a second aspect, an embodiment of this application proposes a delay control method. The method is applied to an application server or an application function network element, and the method includes: sending first information. The first information indicates an end-to-end transmission delay requirement for a first data flow, the end-to-end transmission delay requirement is a transmission delay requirement for data transmission between a first terminal device and a second terminal device. The end-to-end transmission delay requirement is used by a wireless communication network to determine a transmission delay requirement of the wireless communication network from the first terminal device to the second terminal device.

In this embodiment of this application, the application server may send the end-to-end transmission delay requirement for the first data flow to network elements or devices in a network. The end-to-end transmission delay requirement for the first data flow is the transmission delay requirement for data transmission between the first terminal device and the second terminal device. Through collaboration between network elements or devices, end-to-end delay guarantee between the terminal devices is implemented, various service requirements are met, and communication quality is improved.

With reference to the second aspect, in a possible implementation of the second aspect, the first information further includes description information of the first data flow, and the description information of the first data flow includes any one or more pieces of the following information: a source internet protocol IP address of the first data flow, a destination IP address of the first data flow, a source port of the first data flow, a destination port of the first data flow, transport layer protocol information of the first data flow, a queue pair of the first data flow, a service type of the first data flow, or a port index of the first data flow. The first information carries the description information of the first data flow, so that the transmission delay requirement is associated with the first data flow.

With reference to the second aspect, in a possible implementation of the second aspect, the description information, included in the first information, of the first data flow may include description information of an uplink data flow and/or description information of a downlink data flow. Content included in the description information of the uplink data flow or the downlink data flow is the same as content of the description information of the first data flow, and only the first data flow needs to be correspondingly modified to the uplink data flow or the downlink data flow.

With reference to the second aspect, in a possible implementation of the second aspect, the first information indicates an end-to-end transmission delay for the first data flow, and the end-to-end transmission delay for the first data flow indicates an upper transmission time limit value for a packet in the first data flow, thereby improving implementation flexibility of the solution.

With reference to the second aspect, in a possible implementation of the second aspect, the method further includes: obtaining first time information, where the first time information indicates time at which the first terminal device generates or sends a first packet, and the first packet is carried in the first data flow; and/or obtaining second time information, where the second time information indicates time at which the application server receives the first packet, or the second time information indicates time at which the application server sends the first packet to the second terminal device.

Optionally, the end-to-end transmission delay requirement is updated based on the first time information and the second time information.

Specifically, the application server determines a remaining available transmission time of the first packet based on the first time information and the second time information, then determines, based on the remaining available transmission time of the first packet and a first threshold, whether to update the end-to-end transmission delay requirement for the first data flow, and determines whether to send a first notification message to a policy management function network element. In a possible example, when the remaining available transmission time of the first packet is less than or equal to the first threshold, the first notification message is sent to the policy management function network element. When the remaining available transmission time of the first packet is greater than the first threshold, the first notification message is not sent.

It should be noted that in this embodiment of this application, the updating the end-to-end transmission delay requirement for the first data flow may be updating an upper limit value of the end-to-end transmission delay for the first data flow, or may be updating an uplink transmission delay requirement and/or a downlink transmission delay requirement for the first data flow. For example, the end-to-end transmission delay requirement for the first data flow before the update is 20 milliseconds, while the end-to-end transmission delay requirement for the first data flow after the update is 30 milliseconds. For another example, before the update, the uplink transmission delay requirement for the first data flow is 15 milliseconds, and the downlink transmission delay requirement for the first data flow is 15 milliseconds, while after the update, the uplink transmission delay requirement for the first data flow is 10 milliseconds, and the downlink transmission delay requirement for the first data flow is 20 milliseconds.

In this embodiment of this application, the application server may adjust the end-to-end transmission delay requirement for the first data flow in time based on an actual transmission status of a packet of the first data flow, thereby improving adaptability to different service scenarios, meeting various service requirements, and improving communication quality.

With reference to the second aspect, in a possible implementation of the second aspect, the updating the end-to-end transmission delay requirement based on the first time information and/or the second time information includes: receiving a transmission delay requirement set sent by a policy management function PCF, where the transmission delay requirement set includes one or more transmission delay requirement combinations, and each transmission delay requirement combination includes the uplink transmission delay requirement and/or the downlink transmission delay requirement; determining a target transmission delay requirement combination from the transmission delay requirement set based on the first time information and/or the second time information, where the target transmission delay requirement combination belongs to the transmission delay requirement set; and updating the end-to-end transmission delay requirement based on the target transmission delay requirement combination.

In this embodiment of this application, the policy management function network element may send, to the application server, the transmission delay requirement set related to the first data flow, so that the application server determines or updates the end-to-end transmission delay requirement for the first data flow based on the transmission delay requirement set, thereby improving delay guarantee performance, ensuring normal service running, and improving communication quality.

With reference to the second aspect, in a possible implementation of the second aspect, the determining or updating the end-to-end transmission delay requirement based on the transmission delay requirement set includes: sending a second notification message to the policy management function. The second notification message indicates the target transmission delay requirement combination.

In this embodiment of this application, after updating the end-to-end transmission delay requirement for the first data flow based on the transmission delay requirement set, the application server may further notify the policy management function to update the uplink transmission delay requirement for the first data flow and/or the downlink transmission delay requirement for the first data flow, thereby improving delay guarantee performance, ensuring normal service running, and improving communication quality.

With reference to the second aspect, in a possible implementation of the second aspect, the method further includes: receiving a first subscription request sent by the policy management function network element, where the first subscription request is used to request provision of a first notification service, and the first notification service is sending a first notification message when a transmission delay of the first data flow is greater than or equal to a first threshold; obtaining the first time information, where the first time information indicates the time at which the first terminal device generates or sends the first packet, and the first packet is carried in the first data flow; and/or obtaining the second time information, where the second time information indicates the time at which the application server receives the first packet, or the second time information indicates the time at which the application server sends the first packet to the second terminal device; and determining, based on the first time information and/or the second time information and the first threshold, whether to send the first notification message to the policy management function network element.

In this embodiment of this application, the policy management function network element may subscribe to the first notification service from the application server, to update the end-to-end transmission delay requirement for the first data flow in time based on the first notification message of the application server, thereby improving delay guarantee performance, ensuring normal service running, and improving communication quality.

With reference to the second aspect, in a possible implementation of the second aspect, the first information includes a QoS requirement for a first quality of service QoS flow and/or a QoS requirement for a second QoS flow, the QoS requirement for the first QoS flow includes an uplink transmission delay requirement for the first data flow from the first terminal device to a first user plane function network element, and the QoS requirement for the second QoS flow includes a downlink transmission delay requirement for the first data flow from a second user plane function network element to the second terminal device. There are a plurality of possible implementations of the first information, thereby improving implementation flexibility of the solution.

With reference to the second aspect, in a possible implementation of the second aspect, the first information includes a QoS parameter of the first quality of service QoS flow and/or a QoS parameter of the second QoS flow, the QoS parameter of the first QoS flow includes the uplink transmission delay requirement for the first data flow from the first terminal device to the first user plane function network element, and the QoS parameter of the second QoS flow includes the downlink transmission delay requirement for the first data flow from the second user plane function network element to the second terminal device. There are a plurality of possible implementations of the first information, thereby improving implementation flexibility of the solution.

With reference to the second aspect, in a possible implementation of the second aspect, the first information further indicates a packet detection rule for the first data flow. There are a plurality of possible implementations of the first information, thereby improving implementation flexibility of the solution.

With reference to the second aspect, in a possible implementation of the second aspect, the first information further includes a first transmission delay value between the application server and the first user plane function network element and a second transmission delay value between the application server and the second user plane function network element, the first user plane function network element serves the first terminal device, and the second user plane function network element serves the second terminal device. The application server may further provide a transmission delay value between the application server and the user plane function network element, for example, an N6 transmission delay value, to further improve precision of an end-to-end delay guarantee service, and improve communication quality.

With reference to the second aspect, in a possible implementation of the second aspect, the first user plane function network element and the second user plane function network element are a same user plane function network element.

With reference to the second aspect, in a possible implementation of the second aspect, the method further includes: receiving the first packet sent by the first terminal device, where the first packet is carried in the first data flow; and sending the first packet to which the first time information is added to the second terminal device, where the first time information indicates the time at which the first terminal device generates or sends the first packet. The application server may obtain the first time information from the packet, and then add the first time information to an outer packet header, for example, a GTP-U packet header, of the packet, so that another network element or device obtains the first time information. In a possible implementation, address information of the first packet sent by the application server to the second terminal device is different from address information of the first packet received by the application server from the first terminal device.

According to a third aspect, an embodiment of this application proposes a delay control method. The method is applied to a session management function network element, and the method includes: receiving a policy and charging control PCC rule; obtaining third information according to the PCC rule, where the third information includes a QoS requirement for a first quality of service QoS flow and/or a QoS requirement for a second QoS flow, the QoS requirement for the first QoS flow includes an uplink transmission delay requirement for the first data flow from the first terminal device to a first user plane function network element, and the QoS requirement for the second QoS flow includes a downlink transmission delay requirement for the first data flow from a second user plane function network element to the second terminal device; and sending the third information.

In this embodiment of this application, after receiving the PCC rule, the session management function network element may obtain the third information according to the PCC rule. The third information may include the uplink transmission delay requirement for the first data flow and the downlink transmission delay requirement for the first data flow. For example, the third information includes a QoS rule for the first QoS flow that is sent to the first terminal device; an end-to-end transmission delay for the first data flow that is sent to an access network device; a QoS parameter of the first QoS flow and/or a QoS parameter of the second QoS flow that are/is sent to the access network device; and a packet detection rule for the first data flow and/or a QoS enforcement rule for the first data flow that are/is sent to the user plane function network element. Then, the session management function network element sends the third information to another network element or device, so that each network element or device in an uplink direction of the first data flow in a network performs delay guarantee for a packet of the first data flow based on the third information, and each network element or device in a downlink direction of the first data flow in the network performs delay guarantee for the packet of the first data flow based on the third information. Through collaboration between network elements or devices, end-to-end delay guarantee between the terminal devices is implemented, various service requirements are met, and communication quality is improved.

With reference to the third aspect, in a possible implementation of the third aspect, the sending the third information includes: sending the third information to the first terminal device. The third information includes a QoS rule for the first QoS flow. The QoS rule for the first QoS flow indicates the first terminal device to add, to a packet transmitted in the first data flow, time at which the first terminal device sends or generates the packet.

In this embodiment of this application, the session management function network element may further indicate, by using the QoS rule for the first QoS flow, the first terminal device to add first time information to a packet of the first QoS flow. The first time information indicates time at which the first terminal device sends or generates the packet. In this way, another network element in the network obtains the first time information of the packet, thereby implementing delay guarantee.

With reference to the third aspect, in a possible implementation of the third aspect, that the session management function network element sends the third information includes: sending the third information to the first terminal device. The third information includes first indication information. The first indication information indicates the first terminal device to add, to a packet transmitted in the first data flow, information about time at which the first terminal device sends or generates the packet.

In an example, the QoS rule for the first QoS flow includes the first indication information, the first indication information indicates the first terminal device to add, to a packet of the first data flow, first time information of the packet, and the first time information indicates time at which the first terminal device generates or sends the packet, so that based on the first indication information, the first terminal device adds, to a packet transmitted in the first QoS flow, information about time at which the first terminal device generates or sends the packet.

In this embodiment of this application, the session management function network element may further indicate, by using the explicit first indication information, the first terminal device to add first time information to a packet of the first QoS flow. The first time information indicates time at which the first terminal device sends or generates the packet. In this way, another network element in the network obtains the first time information of the packet, thereby implementing delay guarantee.

With reference to the third aspect, in a possible implementation of the third aspect, the sending the third information includes: sending the third information to an access network device. The third information includes an end-to-end transmission delay for the first data flow, the end-to-end transmission delay for the first data flow indicates an upper transmission time limit value for a packet in the first data flow, and the access network device provides a communication service for the second terminal device. There are a plurality of possible implementations of the third information, thereby improving implementation flexibility of the solution.

With reference to the third aspect, in a possible implementation of the third aspect, the sending the third information includes: sending the third information to the access network device. The third information includes a QoS parameter of the first QoS flow and/or a QoS parameter of the second QoS flow, the QoS parameter of the first QoS flow includes the uplink transmission delay requirement for the first data flow from the first terminal device to the first user plane function network element, and the QoS parameter of the second QoS flow includes the downlink transmission delay requirement for the first data flow from the second user plane function network element to the second terminal device. There are a plurality of possible implementations of the third information, thereby improving implementation flexibility of the solution. For example, the session management function network element sends the QoS parameter of the first QoS flow to a first access network device, and sends the QoS parameter of the second QoS flow to a second access network device.

With reference to the third aspect, in a possible implementation of the third aspect, the sending the third information includes: sending the third information to the user plane function network element. The third information includes a packet detection rule for the first data flow and/or a QoS enforcement rule for the first data flow. The QoS enforcement rule for the first data flow indicates the user plane function network element to add, to a packet of the first data flow, time at which the first terminal device generates or sends the packet. There are a plurality of possible implementations of the third information, thereby improving implementation flexibility of the solution.

According to a fourth aspect, an embodiment of this application proposes a delay control method. The method is applied to an access network device, and the method includes: receiving a packet of the first data flow, where the packet includes first time information indicating time at which a first terminal device generates or sends the packet; and determining a sending delay budget for the packet based on an end-to-end transmission delay requirement for the first data flow and the first time information of the packet, where the end-to-end transmission delay requirement is a transmission delay requirement for data transmission between the first terminal device and a second terminal device.

In this embodiment of this application, after the access network device receives the end-to-end transmission delay requirement for the first data flow, based on the end-to-end transmission delay requirement for the first data flow, when receiving a packet of the first data flow in a downlink direction, the access network device may send the packet to the second terminal device based on a sending delay budget for the packet, to ensure that the packet of the first data flow is transmitted from the first terminal device to the second terminal device within the end-to-end transmission delay requirement for the first data flow, thereby implementing end-to-end transmission delay guarantee and improving communication quality.

With reference to the fourth aspect, in a possible implementation of the fourth aspect, the method further includes: receiving third information sent by a session management function network element. The third information includes the end-to-end transmission delay requirement for the first data flow.

With reference to the fourth aspect, in a possible implementation of the fourth aspect, a first time period of the packet is determined based on the first time information of the packet and receiving time at which the access network device receives the packet. The first time period indicates a transmission time of transmitting the packet from the first terminal device to the access network device. The sending delay budget for the packet is determined based on the end-to-end transmission delay requirement for the first data flow and the first time period of the packet. The packet is sent to the second terminal device within the sending delay budget for the packet.

With reference to the fourth aspect, in a possible implementation of the fourth aspect, the sending the packet to the second terminal device within the sending delay budget for the packet includes: preferentially sending the packet with the low sending delay budget to the second terminal device, for example, receiving a first packet in the first data flow; determining a sending delay budget for the first packet; receiving a third packet in the first data flow; determining a sending delay budget for the third packet; and preferentially sending the first packet based on the sending delay budget for the first packet and the sending delay budget for the third packet, where the sending delay budget for the first packet is less than the sending delay budget for the third packet.

In this embodiment of this application, when a plurality of packets of the first data flow arrive at the access network device in the downlink direction, and the access network device has not sent the to-be-sent packets to the second terminal device, the access network device may determine, based on sending delay budgets for the to-be-sent packets, priorities of sending the to-be-sent packets. The first packet of the first data flow and the third packet of the first data flow are used as examples for description. After receiving the first packet, the access network device determines the sending delay budget for the first packet. After receiving the third packet, the access network device determines the sending delay budget for the third packet. If the sending delay budget for the first packet is less than the sending delay budget for the third packet, the access network device preferentially sends the first packet to the second terminal device.

With reference to the fourth aspect, in a possible implementation of the fourth aspect, an air interface transmission delay from the access network device to the second terminal device is obtained, and the sending delay budget for the packet is determined based on the end-to-end transmission delay requirement for the first data flow, the air interface transmission delay from the access network device to the second terminal device, and the first time information of the packet.

In this embodiment of this application, when determining the sending delay budget for the packet, the access network device may further consider the air interface transmission delay from the second terminal device to the access network device, to further improve delay control precision and communication quality.

With reference to the fourth aspect, in a possible implementation of the fourth aspect, the third information includes an end-to-end transmission delay for the first data flow, and the end-to-end transmission delay for the first data flow indicates an upper transmission time limit value for a packet in the first data flow. There are a plurality of possible implementations of the third information, thereby improving implementation flexibility of the solution.

According to a fifth aspect, an embodiment of this application proposes a delay control method. The method is applied to a user plane function network element, and the method includes: receiving third information, where the third information includes a packet detection rule PDR for a first data flow; receiving a first packet, where the first packet is sent by a first terminal device, and the third packet is carried in a first QoS flow; detecting the first packet according to the packet detection rule PDR for the first data flow that is included in the third information; then adding first time information to the first packet according to a QoS flow enforcement rule for the first data flow that is included in the first information, where the first time information indicates time at which the first terminal device sends or generates the first packet; and sending the first packet including the first time information.

In this embodiment of this application, the user plane function network element adds the first time information to the first packet of the first data flow based on indication of the third information. The first time information indicates the time at which the first terminal device sends or generates the first packet. The user plane function network element may obtain the first time information from the packet, and then add the first time information to an outer packet header, for example, a GTP-U packet header, of the packet, so that another network element or device obtains the first time information.

With reference to the fifth aspect, in a possible implementation of the fifth aspect, the method further includes: receiving a first subscription request, where the first subscription request is used to request provision of a first notification service, and the first notification service is sending a first notification message when a transmission delay of the first data flow is greater than or equal to a first threshold; obtaining the first time information, where the first time information indicates the time at which the first terminal device generates or sends the first packet, and the first packet is carried in the first data flow; obtaining third time information, where the third time information indicates receiving time at which the user plane function network element receives or sends the first packet; and determining, based on the first time information, the third time information, and the first threshold, whether to send the first notification message to a policy management function network element.

In this embodiment of this application, the policy management function network element may subscribe to the first notification service from the user plane function network element, so that the policy management function network element updates an end-to-end transmission delay requirement for the first data flow in time based on the first notification message of the user plane function network element, thereby improving delay guarantee performance, ensuring normal service running, and improving communication quality.

According to a sixth aspect, an embodiment of this application proposes a delay control method. The method is applied to a terminal device, and the method includes: The terminal device receives third information, where the third information includes a QoS rule for a first QoS flow; determines a to-be-sent packet according to the QoS rule for the first QoS flow that is included in the third information, where the to-be-sent packet is carried in the first QoS flow; and sends the packet, where the packet carries first time information, and the first time information indicates time at which the terminal device sends or generates the packet.

In this embodiment of this application, the terminal device adds the first time information to the first packet of the first data flow based on indication of the third information. The first time information indicates the time at which the terminal device sends or generates the first packet. In this way, another network element or device obtains the first time information.

With reference to the sixth aspect, in a possible implementation of the sixth aspect, the adding the first time information to the packet includes: adding the first time information to a general packet radio service tunneling protocol-user plane GTP-U packet header of the packet; or adding the first time information to a real-time transport protocol RTP packet header of the packet.

With reference to the sixth aspect, in a possible implementation of the sixth aspect, the QoS rule for the first QoS flow includes first indication information, the first indication information indicates the first terminal device to add, to the packet of the first data flow, the first time information of the packet, and the first time information indicates the time at which the first terminal device generates or sends the packet.

According to a seventh aspect, an embodiment of this application proposes a communication apparatus. The communication apparatus is used in a policy control function network element, and the communication apparatus includes a transceiver module and a processing module.

The transceiver module is configured to receive first information sent by an application server. The first information indicates an end-to-end transmission delay requirement for a first data flow. The end-to-end transmission delay requirement is a transmission delay requirement for data transmission between a first terminal device and a second terminal device.

The processing module is further configured to generate a policy and charging control PCC rule based on the first information. The PCC rule indicates a QoS requirement of a first quality of service QoS flow and/or a QoS requirement for a second QoS flow, the QoS requirement of the first QoS flow includes an uplink transmission delay requirement for the first data flow from the first terminal device to a first user plane function network element, and the QoS requirement for the second QoS flow includes a downlink transmission delay requirement for the first data flow from a second user plane function network element to the second terminal device.

In a possible example, the PCC rule includes first indication information. The first indication information indicates the first terminal device to add, to a packet of the first data flow, first time information of the packet. The first time information indicates time at which the first terminal device generates or sends the packet.

In a possible example, the PCC rule further includes an end-to-end transmission delay budget for the first data flow, and the end-to-end transmission delay budget is a transmission delay budget for data transmission between the first terminal device and the second terminal device.

In a possible example, the end-to-end transmission delay requirement for the first data flow includes the uplink transmission delay requirement for the first data flow from the first terminal device to the first user plane function network element and the downlink transmission delay requirement for the first data flow from the second user plane function network element to the second terminal device.

In a possible example, a sum of the uplink transmission delay requirement and the downlink transmission delay requirement is less than or equal to the end-to-end transmission delay requirement.

In a possible example,
the transceiver module is further configured to obtain a first transmission delay value from the application server to the first user plane function network element and/or a second transmission delay value from the application server to the second user plane function network element.

The processing module is further configured to determine the QoS requirement for the first QoS flow and/or the QoS requirement for the second QoS flow based on the first information and the first transmission delay value and/or the second transmission delay value.

In a possible example, a sum of the uplink transmission delay requirement, the first transmission delay value, the downlink transmission delay requirement, and the second transmission delay value is less than or equal to the end-to-end transmission delay requirement.

In a possible example,
the processing module is further configured to generate a first PCC rule based on the first information, where the first PCC rule indicates the QoS requirement for the first QoS flow.

The processing module is further configured to generate a second PCC rule based on the first information. The second PCC rule indicates the QoS requirement for the second QoS flow.

In a possible example,
the transceiver module is further configured to send a first subscription request, where the first subscription request is used to request provision of a first notification service, and the first notification service is sending a first notification message when a transmission delay of the first data flow is greater than or equal to a first threshold.

The transceiver module is further configured to receive the first notification message. The first notification message indicates that the transmission delay of the first data flow is greater than or equal to the first threshold.

In a possible example, the processing module is further configured to update the uplink transmission delay requirement for the first data flow and/or the downlink transmission delay requirement for the first data flow based on the first notification message.

In a possible example,
the transceiver module is further configured to send a second subscription request, where the second subscription request is used to request the application server to provide a second notification service, and the second notification service is sending, by the application server, the second notification message after determining the target transmission delay requirement from the transmission delay requirement set.

In a possible example, the processing module is further configured to determine a target transmission delay requirement combination from a transmission delay requirement set. The transmission delay requirement set includes one or more transmission delay requirement combinations, and each transmission delay requirement combination includes the uplink transmission delay requirement and/or the downlink transmission delay requirement.

The processing module is further configured to update the uplink transmission delay requirement for the first data flow and/or the downlink transmission delay requirement for the first data flow based on the target transmission delay requirement combination.

In a possible example,
the transceiver module is further configured to send the transmission delay requirement set, where the transmission delay requirement set includes one or more transmission delay requirement combinations, and each transmission delay requirement combination includes the uplink transmission delay requirement and/or the downlink transmission delay requirement.

The transceiver module is further configured to receive a second notification message. The second notification message indicates a target transmission delay requirement combination, and the target transmission delay requirement combination belongs to the one or more transmission delay requirement combinations included in the transmission delay requirement set.

The processing module is further configured to update the uplink transmission delay requirement for the first data flow and/or the downlink transmission delay requirement for the first data flow based on the second notification message.

In a possible example, the QoS requirement for the first QoS flow and/or the QoS requirement for the second QoS flow are/is updated based on an updated uplink transmission delay requirement for the first data flow and/or an updated downlink transmission delay requirement for the first data flow.

In a possible example, the first subscription request further includes description information of the first data flow and/or the first threshold.

In a possible example,
the transceiver module is further configured to obtain time at which the first terminal device sends or generates a first packet, where the first packet belongs to the first data flow.

The processing module is further configured to update the second PCC rule based on the time at which the first terminal device sends or generates the first packet.

According to an eighth aspect, an embodiment of this application proposes a communication apparatus. The communication apparatus is used in an application server, and the communication apparatus includes a transceiver module and a processing module.

The transceiver module is further configured to send first information. The first information indicates an end-to-end transmission delay requirement for a first data flow, the end-to-end transmission delay requirement is a transmission delay requirement for data transmission between a first terminal device and a second terminal device. The end-to-end transmission delay requirement is used by a wireless communication network to determine a transmission delay requirement of the wireless communication network from the first terminal device to the second terminal device.

In a possible example, the first information further includes description information of the first data flow, and the description information of the first data flow includes any one or more pieces of the following information: a source internet protocol IP address of the first data flow, a destination IP address of the first data flow, a source port of the first data flow, a destination port of the first data flow, transport layer protocol information of the first data flow, a queue pair of the first data flow, a service type of the first data flow, or a port index of the first data flow.

In a possible example, the first information includes an end-to-end transmission delay for the first data flow, and the end-to-end transmission delay for the first data flow indicates an upper transmission time limit value for a packet in the first data flow.

In a possible example,
the transceiver module is further configured to obtain first time information, where the first time information indicates time at which the first terminal device generates or sends a first packet, and the first packet is carried in the first data flow; and/or
the transceiver module is further configured to obtain second time information, where the second time information indicates time at which the application server receives the first packet, or the second time information indicates time at which the application server sends the first packet to the second terminal device.

In a possible example, the processing module is further configured to update the end-to-end transmission delay requirement based on the first time information and/or the second time information.

In a possible example,
the transceiver module is further configured to receive a transmission delay requirement set sent by a policy management function PCF, where the transmission delay requirement set includes one or more transmission delay requirement combinations, and each transmission delay requirement combination includes the uplink transmission delay requirement and/or the downlink transmission delay requirement.

The processing module is further configured to determine a target transmission delay requirement combination from the transmission delay requirement set based on the first time information and/or the second time information. The target transmission delay requirement combination belongs to the transmission delay requirement set.

The processing module is further configured to update the end-to-end transmission delay requirement based on the target transmission delay requirement combination.

In a possible example,
the transceiver module is further configured to send a second notification message to the policy management function, where the second notification message indicates the target transmission delay requirement combination.

In a possible example,
the transceiver module is further configured to receive a first subscription request sent by the policy management function network element, where the first subscription request is used to request provision of a first notification service, and the first notification service is sending a first notification message when a transmission delay of the first data flow is greater than or equal to a first threshold.

The transceiver module is further configured to obtain the first time information, where the first time information indicates the time at which the first terminal device generates or sends the first packet, and the first packet is carried in the first data flow; and/or
the transceiver module is further configured to obtain the second time information, where the second time information indicates the time at which the application server receives the first packet, or the second time information indicates the time at which the application server sends the first packet to the second terminal device.

The processing module is further configured to determine, based on the first time information and/or the second time information and the first threshold, whether to send the first notification message to the policy management function network element.

In a possible example, the first subscription request includes the first threshold.

In a possible example,
the transceiver module is further configured to receive the first packet, where the first packet is carried in the first data flow.

The processing module is further configured to obtain the first time information from the first packet.

In a possible example, the first information includes a QoS requirement for a first quality of service QoS flow and/or a QoS requirement for a second QoS flow, the QoS requirement for the first QoS flow includes an uplink transmission delay requirement for the first data flow from the first terminal device to a first user plane function network element, and the QoS requirement for the second QoS flow includes a downlink transmission delay requirement for the first data flow from a second user plane function network element to the second terminal device.

In a possible example, the first information includes a QoS parameter of the first quality of service QoS flow and/or a QoS parameter of the second QoS flow, the QoS parameter of the first QoS flow includes the uplink transmission delay requirement for the first data flow from the first terminal device to the first user plane function network element, and the QoS parameter of the second QoS flow includes the downlink transmission delay requirement for the first data flow from the second user plane function network element to the second terminal device.

In a possible example, the first information further indicates a packet detection rule for the first data flow.

In a possible example, the first information further includes a first transmission delay value between the application server and the first user plane function network element and a second transmission delay value between the application server and the second user plane function network element, the first user plane function network element serves the first terminal device, and the second user plane function network element serves the second terminal device.

In a possible example, the first user plane function network element and the second user plane function network element are a same user plane function network element.

In a possible example,
the transceiver module is further configured to receive the first packet sent by the first terminal device, where the first packet is carried in the first data flow.

The transceiver module is further configured to send the first packet to which the first time information is added to the second terminal device. The first time information indicates the time at which the first terminal device generates or sends the first packet.

According to a ninth aspect, an embodiment of this application proposes a communication apparatus. The communication apparatus is used in a session management function network element, and the communication apparatus includes a transceiver module and a processing module.

The transceiver module is further configured to receive a policy and charging control PCC rule.

The transceiver module is further configured to obtain third information according to the PCC rule. The third information includes a QoS requirement for a first quality of service QoS flow and/or a QoS requirement for a second QoS flow, the QoS requirement for the first QoS flow includes an uplink transmission delay requirement for the first data flow from the first terminal device to a first user plane function network element, and the QoS requirement for the second QoS flow includes a downlink transmission delay requirement for the first data flow from a second user plane function network element to the second terminal device.

The transceiver module is further configured to send the third information.

In a possible example,
the transceiver module is further configured to send the third information to the first terminal device, where the third information includes a QoS rule for the first QoS flow, and the QoS rule for the first QoS flow indicates the first terminal device to add, to a packet transmitted in the first data flow, time at which the first terminal device sends or generates the packet.

In a possible example, the sending the third information includes: sending the third information to the first terminal device. The third information includes first indication information.

The first indication information indicates the first terminal device to add, to a packet transmitted in the first data flow, information about time at which the first terminal device sends or generates the packet.

In a possible example, the QoS rule for the first QoS flow includes the first indication information, the first indication information indicates the first terminal device to add, to a packet of the first data flow, first time information of the packet, and the first time information indicates time at which the first terminal device generates or sends the packet, so that based on the first indication information, the first terminal device adds, to a packet transmitted in the first QoS flow, information about time at which the first terminal device generates or sends the packet.

In a possible example,
the transceiver module is further configured to send the third information to an access network device, where the third information includes an end-to-end transmission delay for the first data flow, the end-to-end transmission delay for the first data flow indicates an upper transmission time limit value for a packet in the first data flow, and the access network device provides a communication service for the second terminal device.

In a possible example,
the transceiver module is further configured to send the third information to an access network device, where the third information includes a QoS parameter of the first QoS flow and/or a QoS parameter of the second QoS flow, the QoS parameter of the first QoS flow includes the uplink transmission delay requirement for the first data flow from the first terminal device to the first user plane function network element, and the QoS parameter of the second QoS flow includes the downlink transmission delay requirement for the first data flow from the second user plane function network element to the second terminal device.

In a possible example,
the transceiver module is further configured to send the third information to the user plane function network element, where the third information includes a packet detection rule for the first data flow and/or a QoS enforcement rule for the first data flow, and the QoS enforcement rule for the first data flow indicates the user plane function network element to add, to a packet of the first data flow, time at which the first terminal device generates or sends the packet.

According to a tenth aspect, an embodiment of this application proposes a communication apparatus. The communication apparatus is used in an access network device, and the communication apparatus includes a transceiver module and a processing module.

The transceiver module is further configured to receive a packet of the first data flow. The packet includes first time information indicating time at which a first terminal device generates or sends the packet.

The processing module is further configured to send the packet to the second terminal device based on an end-to-end transmission delay requirement for the first data flow and the first time information of the packet. The end-to-end transmission delay requirement for the first data flow is a transmission delay requirement for data transmission between the first terminal device and the second terminal device.

In a possible example,
the processing module is further configured to determine a first time period of the packet based on the first time information of the packet and receiving time at which the access network device receives the packet, where the first time period indicates a transmission time of transmitting the packet from the first terminal device to the access network device.

The processing module is further configured to determine the sending delay budget for the packet based on the end-to-end transmission delay requirement for the first data flow and the first time period of the packet.

In a possible example,
the transceiver module is further configured to receive third information sent by a session management function network element, where the third information includes the end-to-end transmission delay requirement for the first data flow.

In a possible example,
the transceiver module is further configured to obtain an air interface transmission delay from the access network device to the second terminal device.

The processing module is further configured to determine the sending delay budget for the packet based on the end-to-end transmission delay requirement for the first data flow, the air interface transmission delay from the access network device to the second terminal device, and the first time information of the packet.

In a possible example, the transceiver module is further configured to preferentially send the packet with the low sending delay budget to the second terminal device.

According to an eleventh aspect, an embodiment of this application proposes a communication apparatus. The communication apparatus is used in a user plane function network element, and the communication apparatus includes a transceiver module and a processing module.

The transceiver module is further configured to receive third information. The third information includes a QoS requirement for a first quality of service QoS flow and/or a QoS requirement for a second QoS flow, the QoS requirement for the first QoS flow includes an uplink transmission delay requirement for a first data flow from a first terminal device to a first user plane function network element, and the QoS requirement for the second QoS flow includes a downlink transmission delay requirement for the first data flow from a second user plane function network element to a second terminal device.

The transceiver module is further configured to receive a first packet. The first packet is sent by the first terminal device, and the third packet is carried in the first QoS flow.

The processing module is further configured to add first time information to the received first packet according to a packet detection rule PDR included in the third information. The first time information indicates time at which the first terminal device sends or generates the first packet.

The transceiver module is further configured to send the first packet including the first time information.

In a possible example,
the processing module is further configured to add the first time information to a general packet radio service tunneling protocol-user plane GTP-U packet header of the first packet, where the first time information indicates the time at which the first terminal device sends or generates the first packet.

In a possible example,
the transceiver module is further configured to receive a first subscription request, where the first subscription request is used to request provision of a first notification service, and the first notification service is sending a first notification message when a transmission delay of the first data flow is greater than or equal to a first threshold.

The transceiver module is further configured to obtain first time information. The first time information indicates time at which the first terminal device generates or sends a first packet, and the first packet is carried in the first data flow.

The transceiver module is further configured to obtain third time information. The third time information indicates receiving time at which the user plane function network element receives the first packet.

The processing module is further configured to determine, based on the first time information, the third time information, and the first threshold, whether to send the first notification message to a policy management function network element.

According to a twelfth aspect, an embodiment of this application proposes a communication apparatus. The communication apparatus is used in a terminal device, and the communication apparatus includes a transceiver module and a processing module.

The transceiver module is further configured to: receive third information, where the third information includes a QoS rule for a first QoS flow; and determine a to-be-sent packet according to the QoS rule for the first QoS flow that is included in the third information, where the to-be-sent packet is carried in the first QoS flow.

The transceiver module is further configured to send the packet. The packet carries first time information, and the first time information indicates time at which the first terminal device sends or generates the packet.

In a possible example,
the processing module is further configured to: add the first time information to a general packet radio service tunneling protocol-user plane GTP-U packet header of the packet; or add the first time information to a real-time transport protocol RTP packet header of the packet.

In a possible example, the QoS rule for the first QoS flow includes first indication information, the first indication information indicates the first terminal device to add, to the packet of the first data flow, the first time information of the packet, and the first time information indicates the time at which the first terminal device generates or sends the packet.

In a possible example, the QoS rule for the first QoS flow includes first indication information, the first indication information indicates the first terminal device to add, to the packet of the first data flow, the first time information of the packet, and the first time information indicates the time at which the first terminal device generates or sends the packet.

A thirteenth aspect of this application provides a communication apparatus. The apparatus can implement the method in any one of the first aspect or the possible implementations of the first aspect. The apparatus includes a corresponding unit or module configured to perform the method. The unit or module included in the apparatus may be implemented by using software and/or hardware. For example, the apparatus may be a policy control function network element, or the apparatus may be a component (for example, a processor, a chip, or a chip system) in the policy control function network element, or the apparatus may be a logical module or software that can completely or partially implement the policy control function network element. The communication apparatus includes a transceiver module and a processing module. For example, the communication apparatus is a server having a policy control function network element.

A fourteenth aspect of this application provides a communication apparatus. The apparatus can implement the method in any one of the second aspect or the possible implementations of the second aspect. The apparatus includes a corresponding unit or module configured to perform the method. The unit or module included in the apparatus may be implemented by using software and/or hardware. For example, the apparatus may be an application server, or the apparatus may be a component (for example, a processor, a chip, or a chip system) in the application server, or the apparatus may be a logical module or software that can completely or partially implement the application server. The communication apparatus includes a transceiver module and a processing module.

A fifteenth aspect of this application provides a communication apparatus. The apparatus can implement the method in any one of the third aspect or the possible implementations of the third aspect. The apparatus includes a corresponding unit or module configured to perform the method. The unit or module included in the apparatus may be implemented by using software and/or hardware. For example, the apparatus may be a session management function network element, or the apparatus may be a component (for example, a processor, a chip, or a chip system) in the session management function network element, or the apparatus may be a logical module or software that can completely or partially implement the session management function network element. The communication apparatus includes a transceiver module and a processing module.

A sixteenth aspect of this application provides a communication apparatus. The apparatus can implement the method in any one of the fourth aspect or the possible implementations of the fourth aspect. The apparatus includes a corresponding unit or module configured to perform the method. The unit or module included in the apparatus may be implemented by using software and/or hardware. For example, the apparatus may be an access network device, or the apparatus may be a component (for example, a processor, a chip, or a chip system) in the access network device, or the apparatus may be a logical module or software that can completely or partially implement the access network device. The communication apparatus includes a transceiver module and a processing module.

A seventeenth aspect of this application provides a communication apparatus. The apparatus can implement the method in any one of the fifth aspect or the possible implementations of the fifth aspect. The apparatus includes a corresponding unit or module configured to perform the method. The unit or module included in the apparatus may be implemented by using software and/or hardware. For example, the apparatus may be a user plane function network element, or the apparatus may be a component (for example, a processor, a chip, or a chip system) in the user plane function network element, or the apparatus may be a logical module or software that can completely or partially implement the user plane function network element. The communication apparatus includes a transceiver module and a processing module.

An eighteenth aspect of this application provides a communication apparatus. The apparatus can implement the method in any one of the sixth aspect or the possible implementations of the sixth aspect. The apparatus includes a corresponding unit or module configured to perform the method. The unit or module included in the apparatus may be implemented by using software and/or hardware. For example, the apparatus may be a terminal device, or the apparatus may be a component (for example, a processor, a chip, or a chip system) in the terminal device, or the apparatus may be a logical module or software that can completely or partially implement the terminal device. The communication apparatus includes a transceiver module and a processing module.

A nineteenth aspect of embodiments of this application provides a communication apparatus, including at least one processor. The at least one processor is coupled to a memory. The memory is configured to store a program or instructions. The at least one processor is configured to execute the program or the instructions, to enable the apparatus to implement the method in any one of the possible implementations of the first aspect to the sixth aspect.

A twentieth aspect of embodiments of this application provides a communication apparatus, including: a communication interface, configured to input and/or output signaling or data; and a processor, configured to execute a computer-executable program, to enable the apparatus to implement the method in any one of the possible implementations of the first aspect to the sixth aspect.

A twenty-first aspect of embodiments of this application provides a communication apparatus, including at least one logic circuit and an input/output interface. The input/output interface is configured to input or output information. The logic circuit is configured to perform the method in any one of the possible implementations of the first aspect to the sixth aspect.

A twenty-second aspect of embodiments of this application provides a computer program product (or referred to as a computer program). When the computer program product is executed by a processor, the processor performs the method in any one of the first aspect to the sixth aspect and the possible implementations thereof.

A twenty-third aspect of embodiments of this application provides a chip system. The chip system includes at least one processor, configured to support a communication apparatus in implementing the method in any one of the first aspect to the sixth aspect and the possible implementations thereof.

In a possible design, the chip system may further include a memory, and the memory is configured to store program instructions and data necessary for the communication apparatus. The chip system may include a chip, or may include a chip and another discrete component. Optionally, the chip system further includes an interface circuit, and the interface circuit provides program instructions and/or data for the at least one processor.

A twenty-fourth aspect of embodiments of this application provides a communication system. The communication system includes the communication apparatus in the seventh aspect, the communication apparatus in the eighth aspect, the communication apparatus in the ninth aspect, the communication apparatus in the tenth aspect, the communication apparatus in the eleventh aspect, and/or the communication apparatus in the twelfth aspect.

For technical effects brought by any design in the seventh aspect to the twenty-fourth aspect, refer to technical effects brought by different implementations in the first aspect to the sixth aspect. Details are not described herein again.

### BRIEF DESCRIPTION OF DRAWINGS

FIG. 1 is a diagram of a communication system according to an embodiment of this application;
FIG. 2 is a diagram of a communication system according to an embodiment of this application;
FIG. 3 is a diagram of a communication system according to an embodiment of this application;
FIG. 4a to FIG. 4c are a schematic flowchart of an embodiment of a delay control method according to embodiments of this application;
FIG. 5 is another schematic flowchart of an embodiment of a delay control method according to embodiments of this application;
FIG. 6 is another schematic flowchart of an embodiment of a delay control method according to embodiments of this application;
FIG. 7 is another schematic flowchart of an embodiment of a delay control method according to embodiments of this application;
FIG. 8 is another schematic flowchart of an embodiment of a delay control method according to embodiments of this application;
FIG. 9 is a diagram of a communication apparatus according to this application;
FIG. 10 is another diagram of a communication apparatus according to this application;
FIG. 11 is another diagram of a communication apparatus according to this application; and
FIG. 12 is another diagram of a communication apparatus according to this application.

### DESCRIPTION OF EMBODIMENTS

The following clearly and completely describes technical solutions in embodiments of this application with reference to accompanying drawings in embodiments of this application. It is clear that the described embodiments are merely a part of rather than all embodiments of this application. The terms "first" and "second" and corresponding term numbers or the like in the specification, claims, and accompanying drawings of this application are used to distinguish between similar objects, but are not necessarily used to describe a specific sequence or order. It should be understood that terms used in such a way are interchangeable in appropriate circumstances, which is merely a discrimination manner used when objects of a same attribute are described in embodiments of this application. In addition, the terms "include" and "have" and any other variants thereof mean to cover the non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may represent A or B. In this application, "and/or" describes only an association relationship for describing associated objects and indicates that three relationships may exist. For example, A and/or B may indicate the following three cases: Only A exists, both A and B exist, and only B exists. In addition, in descriptions of this application, "at least one item" means one or more items, and "a plurality of items" means two or more items. The expression "at least one of the following items (pieces)" or the like means any combination of these items, including any combination of single or plural items (pieces). For example, at least one item (piece) of a, b, or c may represent a, b, c, a and b, a and c, b and c, or a, b, and c, where a, b, and c may be singular or plural.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th-generation (5th-generation, 5G) system, a new generation (new generation, NR) communication system, or a future 6th-generation communication system.

In the communication systems, a part operated by an operator may be referred to as an operator network. The operator network may also be referred to as a public land mobile network (public land mobile network, PLMN), which is a network established and operated by a government or an operator approved by the government to provide a land mobile communication service for the public, and is mainly a public network through which a mobile network operator (mobile network operator, MNO) provides a mobile broadband access service for users. The operator network or the PLMN described in embodiments of this application may be a network compliant with a requirement of a 3rd generation partnership project (3rd generation partnership project, 3GPP) standard, referred to as a 3GPP network for short. Generally, the 3GPP network is operated by an operator, and includes but is not limited to a 5th-generation (5th-generation, 5G) mobile communication network, a 4th-generation (4th-generation, 4G) mobile communication network, or a 3rd-generation (3rd-generation, 3G) mobile communication technology network, as well as a future 6th-generation (6th-generation, 6G) mobile communication network.

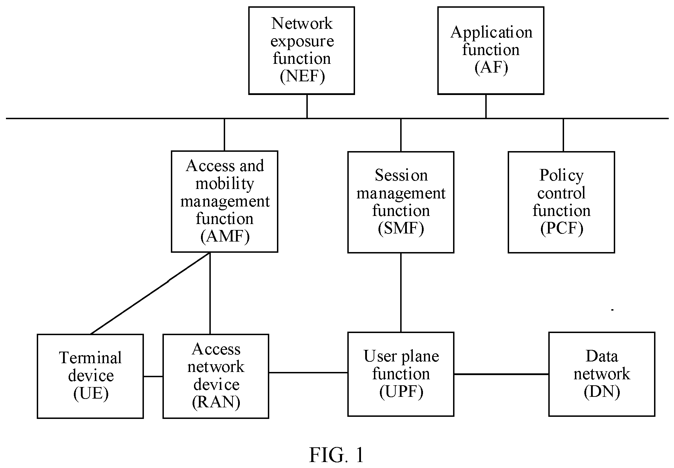

FIG. 1 is a diagram of a communication system according to an embodiment of this application. As shown in FIG. 1, the communication system includes an access and mobility management function (access and mobility management function, AMF), a session management function (session management function, SMF), a unified data management (unified data management, UDM), a radio access network (radio access network, RAN), a policy control function (policy control function, PCF), a terminal device, a user plane function (user plane function, UPF), a network exposure function (network exposure function, NEF), an application function (Application Function, AF), a data network (data network, DN), and the like.

The following briefly describes the network functions (or network elements) shown in FIG. 1.

The terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable apparatus, a terminal device in a 5G network, a terminal device in a future evolved public land mobile network, or the like. This is not limited in embodiments of this application.

For example rather than limitation, in embodiments of this application, the terminal device may alternatively be a wearable device. The wearable device may also be referred to as a wearable intelligent device, which is a general term for devices that can be worn and that are developed by intelligently designing everyday wearing by applying wearable technologies, such as glasses, gloves, watches, clothing, and shoes. The wearable device is a portable device that can be directly worn on the body or integrated onto clothes or accessories of a user. The wearable device is more than a hardware device, and implements a powerful function through software support, data exchange, and cloud interaction. In a broad sense, the wearable intelligent device includes full-featured and large-sized devices that can implement all or a part of functions without depending on smartphones, for example, smart watches or smart glasses, and includes devices that focus on a specific type of application function and need to collaboratively work with other devices such as smartphones, for example, various smart bands or smart jewelry for monitoring physical signs.

In addition, in embodiments of this application, the terminal device may alternatively be a terminal device in an internet of things (internet of things, IoT) system. The IoT is an important part of future information technology development. A main technical feature of the IoT is connecting things to a network by using a communication technology, to implement an intelligent network for human-machine interconnection or thing-thing interconnection.

It should be noted that a terminal device and an access network device may communicate with each other by using an air interface technology (for example, an NR or LTE technology), and terminal devices may also communicate with each other by using an air interface technology (for example, an NR or LTE technology).

In embodiments of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete component.

The access network device (also referred to as a radio access network) may be a device having a wireless transceiver function. The access network device may be a device that provides a wireless communication function service, usually located on a network side, and includes but is not limited to a next-generation NodeB (gNodeB, gNB) in a 5th-generation communication system, a next-generation base station in a 6th mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home base station (for example, a home evolved NodeB, or a home NodeB, HNB), a wireless access point, a baseband unit (baseband unit, BBU), a transmission reception point (transmission reception point, TRP), a transmitting point (transmitting point, TP), a base transceiver station (base transceiver station, BTS), and the like. In a network structure, the access network device may include a central unit (central unit, CU) node, a distributed unit (distributed unit, DU) node, a RAN device including a CU node and a DU node, or a RAN device including a CU control plane node, a CU user plane node, and a DU node. The access network device serves a cell, and user equipment communicates with a base station by using a transmission resource (for example, a frequency domain resource, or referred to as a spectrum resource) used by the cell. The cell may be a cell corresponding to the base station (for example, a NodeB). The cell may belong to a macro base station, or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service. The access network device may be a macro base station, or may be a micro base station or an indoor station, or may be a relay node or a donor node, a device that is in a V2X communication system and that provides a wireless communication service for user equipment, a radio controller in a cloud radio access network (cloud radio access network, CRAN) scenario, a relay station, a vehicle-mounted device, a wearable device, a network device in a future evolved network, or the like. A specific technology and a specific device form that are used by the access network device are not limited in embodiments of this application.

The unified data management network element (which may also be referred to as a unified data management network unit, a unified data management network element entity, a data management device, or a unified data management network element device) is one of core network devices, and is mainly configured to handle terminal device identification, access authentication, registration, mobility management, and the like. The unified data management is a control plane device.

The policy control function (which may also be referred to as a policy control network element, a policy control function network element, a policy control device, a policy control function network element entity, or the like) is mainly responsible for session-level or service flow-level charging, quality of service bandwidth guarantee and mobility management, terminal device policy decision, and the like.

The session management function (which may also be referred to as a session management function network element) mainly performs functionalities such as session management, enforcement of a control policy delivered by the PCF, UPF selection, and terminal device internet protocol address allocation.

The access and mobility management function (which may also be referred to as an access and mobility management function entity, an access and mobility management device, an access and mobility management function network element, an access management device, or a mobility management device) is one of core network devices, mainly used for mobility management, access management, and the like, and may be configured to implement functionalities other than session management in functionalities of a mobility management entity (mobility management entity, MME), for example, functionalities such as lawful intercept, access authorization (or authentication), user equipment registration, mobility management, tracking area update procedures, reachability detection, session management function network element selection, and mobility state transition management.

The user plane function (which may also be referred to as a user plane device, a user plane function network element, a user plane function network unit, or a user plane function entity) mainly includes the following functionalities: packet routing and transmission, packet detection, service usage reporting, QoS handling, uplink packet detection, downlink packet storage, and other user plane-related functionalities.

The application function AF is similar to an application server, which interacts with another 5G core network control plane (NF) and provides a service. The AF may exist for different application services, and may be owned by an operator or a trusted third party. For example, this network element mainly functions to notify the PCF of a latest service requirement of a third-party enterprise for an application. The PCF generates a corresponding quality of service (quality of service, QoS) rule based on the requirement, to ensure that a service provided by the network meets the requirement of the third party.

It should be noted that the application server in embodiments of this application includes an application function (AF) and/or an application server (application server, AS) or another device (or function, network element, or the like) that can support or provide an application service (or a service). This is not limited in embodiments of this application.

The network exposure function, NEF, may also be referred to as a network exposure device, a network exposure function entity, a network exposure function network element, a network capability exposure function entity, a network capability exposure function device, a network capability exposure function network element, a network capability exposure device, or the like. The NEF is mainly configured to support capability and event exposure, for example, securely expose, to the outside, services, capabilities, or the like provided by 3GPP network functions.

It should be understood that the RAN, the SMF, the PCF, or the AF in embodiments of this application may also be referred to as a communication apparatus or a communication device, which may be a general-purpose device or a dedicated device. This is not specifically limited in this application.

It should be further understood that the foregoing names are merely used to distinguish between different functions, rather than represent that these devices are independent physical devices. Specific forms of the devices are not limited in this application. For example, the devices may be integrated into a same physical device, or may be different physical devices. In actual deployment, network functions (or referred to as functions for short), network elements, or devices may be integrated. For example, the access and mobility management function network element may be integrated with the session management function network element, or the session management function network element may be integrated with the user plane function network element. When two functions are integrated, interaction between the two functions provided in embodiments of this application becomes an internal operation of the integrated function or may be omitted.

It may be understood that the function may be a network element in a hardware device, a software function running on dedicated hardware, a combination of hardware and software, or a virtualization function instantiated on a platform (for example, a cloud platform).

It should be noted that names of the devices (such as the AF, the SMF, the PCF, and the AMF) in FIG. 1 are merely names, and the names do not limit functions of the devices. In the 5G network and other networks in the future, the devices may have other names. This is not specifically limited in this application. For example, in a 6G network, terms in 5G may be reused for a part of or all the network elements, or other names may be used. This applies throughout and is not repeated below.

It should be noted that examples mentioned in this application do not represent the optimal, and first, second, and the like mentioned in this application are merely used to distinguish between different information, messages, or other objects, and do not represent a sequence relationship. In addition, mutual reference may be made to embodiments in this application, and identical or similar steps or terms are not repeatedly described one by one.

In embodiments of this application, a direction from the terminal device to the application server (or the user plane function network element) is referred to as an uplink direction, and correspondingly, a direction from the application server (or the user plane function network element) to the terminal device is referred to as a downlink direction.

Currently, when the user plane function network element receives packets in the downlink direction, the user plane function network element encapsulates the packets (packets) into a same quality of service flow (QoS flow) based on a flow processing policy filter (Packet Detection Rule filter, PDR filter) preconfigured by the session management function network element. The PDR filter of the session management function network element is obtained from a policy and charging control rule (policy and charging control rule, PCC Rule) of the policy management function network element. A QoS identifier (QoS flow identifier, QFI) of each QoS flow is associated with a QoS profile (QoS profile). The network side uses same QoS guarantee for packets of a same QoS flow based on a QoS parameter (QoS parameter) in the QoS profile. The QoS guarantee includes but is not limited to a delay, a forwarding priority, a packet loss rate, or the like.

The policy management function network element generates the PCC rule, and then the session management function network element obtains a QoS requirement (QoS requirement) for a corresponding QoS flow according to the PCC rule. Generally, the QoS requirement may be represented by using a QoS parameter. In the PCC rule, a packet delay budget (packet delay budget, PDB) may be used to define a transmission delay requirement. Since delay control in a current QoS model focuses only on transmission between the UPF and the terminal device, how to control an end-to-end transmission delay between terminal devices becomes an urgent technical problem to be resolved.

Based on this, embodiments of this application propose a delay control method. A policy control function receives first information sent by an application server, where the first information indicates an end-to-end transmission delay requirement for a first data flow, and the end-to-end transmission delay requirement is a transmission delay requirement for data transmission between a first terminal device and a second terminal device; and generates a policy and charging control PCC rule based on the first information, where the PCC rule indicates a QoS requirement for a first quality of service QoS flow and/or a QoS requirement for a second QoS flow, the QoS requirement for the first QoS flow includes an uplink transmission delay requirement for the first data flow from the first terminal device to a first user plane function network element, and the QoS requirement for the second QoS flow includes a downlink transmission delay requirement for the first data flow from a second user plane function network element to the second terminal device. The policy control function network element obtains the uplink transmission delay requirement for the first data flow and/or the downlink transmission delay requirement for the first data flow through division based on the end-to-end transmission delay requirement for the first data flow. A transmission delay between the first terminal device and the second terminal device is controlled by using the uplink transmission delay requirement for the first data flow and/or the downlink transmission delay requirement for the first data flow, thereby improving communication quality in an end-to-end service scenario.

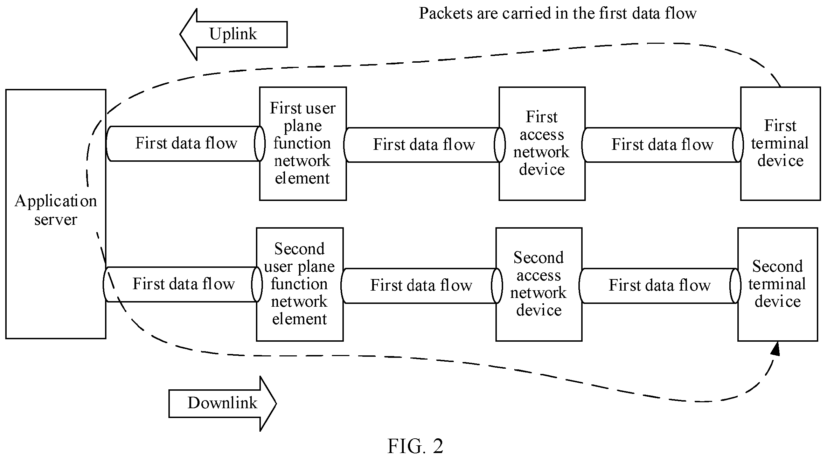

The following describes communication systems related to this application. In an example, FIG. 2 is a diagram of a communication system according to an embodiment of this application. The communication system provided in this embodiment of this application includes a first user plane function network element, a first access network device, a first terminal device, a second user plane function network element, a second access network device, a second terminal device, and an application server. A data transmission direction from the first terminal device to the application server is referred to as an uplink direction, and a transmission delay requirement from the first terminal device to the application server is referred to as an uplink transmission delay requirement. A data transmission direction from the application server to the second terminal device is referred to as a downlink direction, and a transmission delay requirement from the application server to the second terminal device is referred to as a downlink transmission delay requirement. The first terminal device sends a packet to the second terminal device through a first data flow. The packet reaches the second terminal device through the first access network device, the first user plane function network element, the application server, the second user plane function network element, and the second access network device. For ease of description, the communication system shown in FIG. 2 is referred to as a system with data network (data network, DN) involvement (DN involvement).

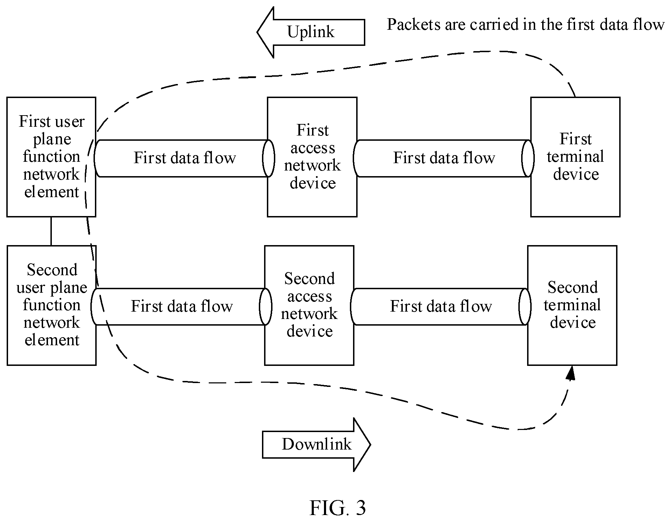

In another example, FIG. 3 is a diagram of a communication system according to an embodiment of this application. The communication system provided in this embodiment of this application includes a first user plane function network element, a first access network device, a first terminal device, a second user plane function network element, a second access network device, and a second terminal device. A data transmission direction from the first terminal device to the first user plane function network element is referred to as an uplink direction, and a transmission delay requirement from the first terminal device to the first user plane function network element is referred to as an uplink transmission delay requirement. A data transmission direction from the second user plane function network element to the second terminal device is referred to as a downlink direction, and a transmission delay requirement from the second user plane function network element to the second terminal device is referred to as a downlink transmission delay requirement. The first terminal device sends a packet to the second terminal device through a first data flow. The packet reaches the second terminal device through the first access network device, the first user plane function network element, the application server, the second user plane function network element, and the second access network device. For ease of description, the communication system shown in FIG. 3 is referred to as a system without data network involvement (without DN involvement).

It should be noted that the first access network device and the second access network device may be a same access network device, or may be two access network devices independent of each other. This is not limited in embodiments of this application. The first user plane function network element and the second user plane function network element may be a same user plane function network element, or may be two user plane function network elements that are independent of each other. This is not limited in embodiments of this application.

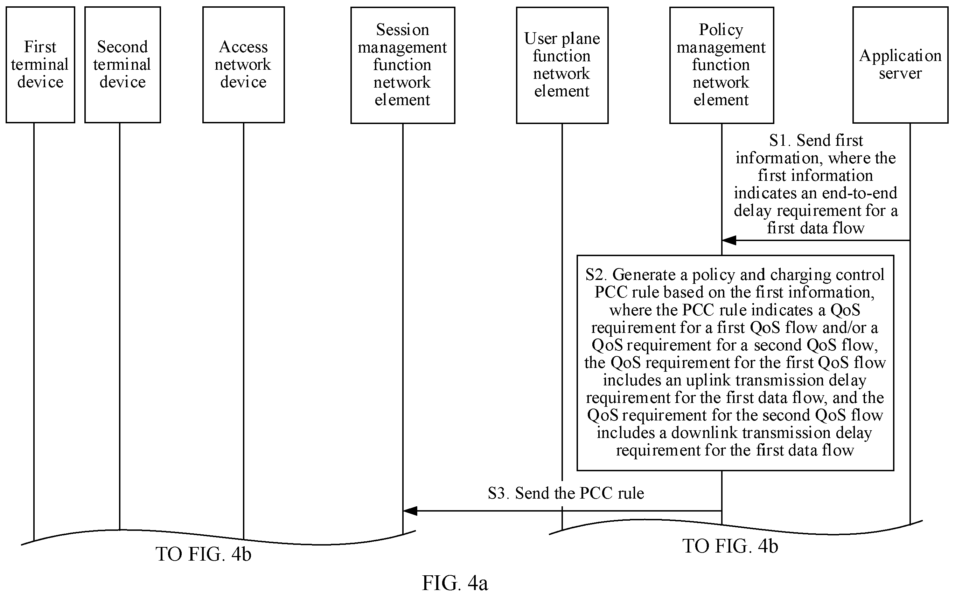

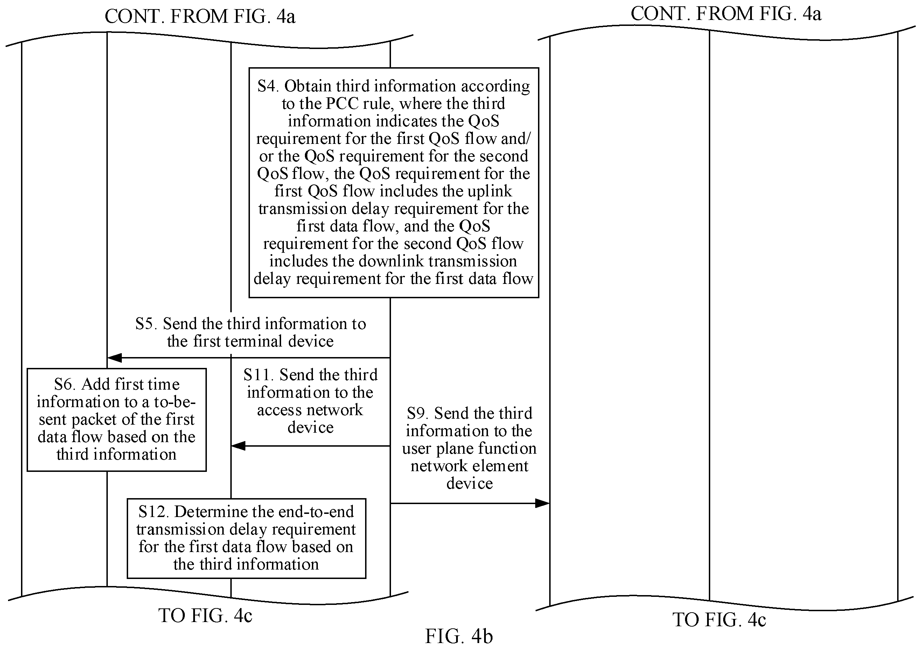

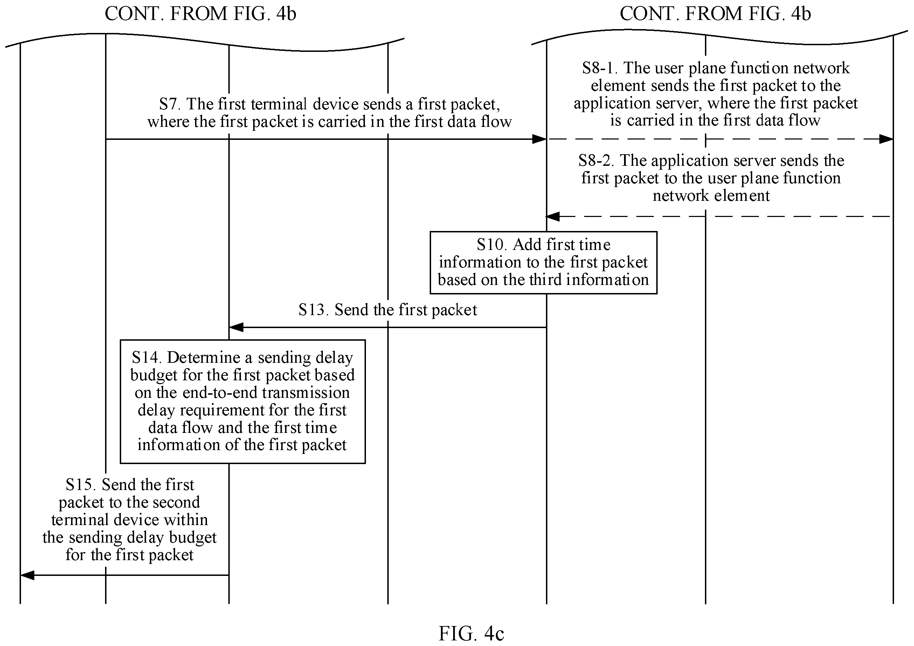

The following describes embodiments of this application with reference to accompanying drawings in combination with the foregoing communication systems. FIG. 4a to FIG. 4c are a schematic flowchart of an embodiment of a delay control method according to embodiments of this application. The delay control method provided in this embodiment of this application includes the following steps.

S1. An application server sends first information to a policy control function network element, where the first information indicates an end-to-end delay requirement for a first data flow.

In step S1, an application server sends first information to a policy control function network element. The first information indicates an end-to-end transmission delay requirement for a first data flow, the end-to-end transmission delay requirement is a transmission delay requirement for data transmission between a first terminal device and a second terminal device. The end-to-end transmission delay requirement is used by a wireless communication network to determine a transmission delay requirement of the wireless communication network from the first terminal device to the second terminal device. For example, the end-to-end transmission delay requirement is used to determine an uplink transmission delay requirement for the first data flow from the first terminal device to a first user plane function network element and/or a downlink transmission delay requirement for the first data flow from a second user plane function network element to the second terminal device. A sum of the uplink transmission delay requirement and the downlink transmission delay requirement is less than or equal to the end-to-end transmission delay requirement.

It should be noted that the first information indicating the end-to-end transmission delay requirement for the first data flow is merely an example for description. The first information may further indicate an end-to-end transmission delay requirement for another data flow between the first terminal device and the second terminal device. The first information may indicate an end-to-end transmission delay requirement for one data flow, or the first information may indicate end-to-end transmission delay requirements for a plurality of data flows. This is not limited in this embodiment of this application.

It should be noted that the first information may further indicate end-to-end transmission delay requirements for one or more data flows in an uplink direction (referred to as an uplink data flow for ease of description) and one or more data flows in a downlink direction (referred to as a downlink data flow for ease of description) that have an association relationship with the one or more uplink data flows. The uplink data flow is used to carry uplink data from the first terminal device to the first user plane function network element or the application server, and the downlink data flow is used to carry downlink data from the application server or the second user plane function network element to the second terminal device. This is not limited in this embodiment of this application.

In a possible implementation, the first information further includes description information of the first data flow, and the description information of the first data flow includes any one or more pieces of the following information: a source internet protocol IP address of the first data flow, a destination IP address of the first data flow, a source port of the first data flow, a destination port of the first data flow, transport layer protocol information of the first data flow, a queue pair of the first data flow, a service type of the first data flow, or a port index of the first data flow. The end-to-end transmission delay requirement is associated with the first data flow by using the description information, included in the first information, of the first data flow.

In a possible implementation, the description information, included in the first information, of the first data flow may include description information of the uplink data flow and/or description information of the downlink data flow. Content included in the description information of the uplink or downlink data flow is the same as content of the description information of the first data flow, and only the first data flow needs to be correspondingly modified to the uplink or downlink data flow.

In a possible implementation, the first information specifically includes an end-to-end transmission delay for the first data flow, and the end-to-end transmission delay for the first data flow indicates an upper transmission time limit value for a packet in the first data flow. For example, the end-to-end transmission delay for the first data flow indicates an upper transmission time limit value for transmitting a first packet in the first data flow from the first terminal device to the second terminal device. A transmission time of transmitting the first packet from the first terminal device to the second terminal device may be sending time at which the first terminal device sends the first packet to receiving time at which the second terminal device receives the first packet, or may be generation time at which the first terminal device generates the first packet to the receiving time at which the second terminal device receives the first packet. This is not limited in this embodiment of this application.

In a possible implementation, optionally, when the first data flow passes through the application server, where the first packet is used as an example, the application server may further determine a second packet based on the first packet. The second packet has an association relationship with the first packet. For example, the second packet is a packet generated by the application server based on the first packet. For another example, the second packet includes service data carried in the first packet. In this case, the end-to-end transmission delay for the first data flow may further indicate an upper transmission time limit value from the time at which the first terminal device generates or sends the first packet to time at which the second terminal device receives the second packet. In this embodiment of this application, related processing on the first packet may be further applied to the second packet. Details are not described herein again. The second packet may be carried in the first data flow, or the second packet may be carried in another data flow between the application server and the second terminal device. This is not limited herein.

Optionally, the first information may include the uplink transmission delay requirement for the first data flow and the downlink transmission delay requirement for the first data flow. For example, the uplink transmission delay requirement for the first data flow indicates an upper transmission time limit value for transmitting the first packet in the first data flow from the first terminal device to the first user plane function network element, and the downlink transmission delay requirement for the first data flow indicates an upper transmission time limit value for transmitting the first packet in the first data flow from the second user plane function network element to the second terminal device. A transmission time of transmitting the first packet from the first terminal device to the first user plane function network element may be the time at which the first terminal device sends or generates the first packet to receiving time at which the first user plane function network element receives the first packet, or may be the time at which the first terminal device generates or sends the first packet to time at which the first user plane function network element sends the first packet to the second user plane function network element, or may be the time at which the first terminal device generates or sends the first packet to time at which the second user plane function network element receives the first packet. A transmission time of transmitting the first packet from the second user plane function network element to the second terminal device may be time at which the second user plane function network element sends the first packet to the receiving time at which the second terminal device receives the first packet.

For another example, the uplink transmission delay requirement for the first data flow indicates an upper transmission time limit value for transmitting the first packet in the first data flow from the first terminal device to the application server, and the downlink transmission delay requirement for the first data flow indicates an upper transmission time limit value for transmitting the first packet in the first data flow from the application server to the second terminal device. A transmission time of transmitting the first packet from the first terminal device to the application server may be the time at which the first terminal device sends or generates the first packet to receiving time at which the application server receives the first packet, or may be the time at which the first terminal device sends or generates the first packet to time at which the application server sends the first packet to the second user plane function network element. A transmission time of transmitting the first packet from the application server to the second terminal device may be the time at which the application server sends the first packet to the receiving time at which the second terminal device receives the first packet.

In a possible implementation, the first information includes a QoS requirement for a first quality of service QoS flow and/or a QoS requirement for a second QoS flow, the QoS requirement for the first QoS flow includes the uplink transmission delay requirement for the first data flow from the first terminal device to the first user plane function network element, and the QoS requirement for the second QoS flow includes the downlink transmission delay requirement for the first data flow from the second user plane function network element to the second terminal device. The uplink transmission delay requirement for the first data flow is a transmission delay requirement for transmitting a packet in the first data flow from the first terminal device to the first user plane function network element, or a transmission delay requirement for transmitting a packet of the first data flow from the first terminal device to the application server. The downlink transmission delay requirement for the first data flow is a transmission delay requirement for transmitting a packet in the first data flow from the second user plane function network element to the second terminal device, or a transmission delay requirement for transmitting a packet of the first data flow from the application server to the second terminal device.

In a possible implementation, the first information includes a QoS parameter of the first quality of service QoS flow and/or a QoS parameter of the second QoS flow, the QoS parameter of the first QoS flow includes the uplink transmission delay requirement for the first data flow from the first terminal device to the first user plane function network element, and the QoS parameter of the second QoS flow includes the downlink transmission delay requirement for the first data flow from the second user plane function network element to the second terminal device.

In a possible implementation, the first information further indicates a packet detection rule (PDR) for the first data flow.

In a possible implementation, the first information further includes a first transmission delay value between the application server and the first user plane function network element and a second transmission delay value between the application server and the second user plane function network element, the first user plane function network element serves the first terminal device, and the second user plane function network element serves the second terminal device. In this case, a sum of the uplink transmission delay requirement, the first transmission delay value, the downlink transmission delay requirement, and the second transmission delay value is less than or equal to the end-to-end transmission delay requirement.

Further, the application server may further update the first information based on an actual transmission time of a packet in the first data flow. For example, the application server obtains first time information, where the first time information indicates the time at which the first terminal device generates or sends the first packet; and/or the application server obtains second time information, where the second time information indicates the time at which the application server sends the first packet to the second terminal device. Then, the application server determines an updated end-to-end transmission delay requirement for the first data flow based on the first time information and/or the second time information and a first threshold, to update the first information based on the end-to-end transmission delay requirement for the first data flow. The first threshold may be configured by the policy management function network element for the application server, or may be generated by the application server based on a service requirement, or may be configured by a user for the application server. This is not limited in this embodiment of this application. For example, when the application server determines, based on the first time information, the second time information, and the first threshold, that a remaining delay budget (that is, the end-to-end delay budget for the first data flow minus the second time information and the first time information) for the first packet is small, the application server updates the first information. In updated first information, the end-to-end transmission delay requirement for the first data flow is increased.

It should be noted that in this embodiment of this application, the updating the end-to-end transmission delay requirement for the first data flow may be updating an upper limit value of the end-to-end transmission delay for the first data flow, or may be updating the uplink transmission delay requirement and/or the downlink transmission delay requirement for the first data flow. For example, the end-to-end transmission delay requirement for the first data flow before the update is 20 milliseconds, while the end-to-end transmission delay requirement for the first data flow after the update is 30 milliseconds. For another example, before the update, the uplink transmission delay requirement for the first data flow is 15 milliseconds, and the downlink transmission delay requirement for the first data flow is 15 milliseconds, while after the update, the uplink transmission delay requirement for the first data flow is 10 milliseconds, and the downlink transmission delay requirement for the first data flow is 20 milliseconds. When the application server obtains the first time information, the application server may obtain the first time information from a general packet radio service tunneling protocol-user plane (general packet radio service tunneling protocol-user plane, GTP-U) packet header of the first packet. The first time information indicates the time at which the first terminal device sends or generates the first packet.

For another example, the application server may further obtain the receiving time at which the second terminal device receives the first packet. The application server determines, based on the first time information, the second time information, and the receiving time at which the second terminal device receives the first packet, whether to update the first information.

Optionally, when the application server determines the updated end-to-end transmission delay requirement for the first data flow based on the first time information and/or the second time information and the first threshold, the application server may determine, based on the first time information, the second time information, and the first threshold, a target transmission delay requirement from a transmission delay requirement set configured by the policy control function network element. The transmission delay requirement set includes one or more transmission delay requirement combinations, and each transmission delay requirement combination includes an uplink transmission delay requirement and/or a downlink transmission delay requirement. Then, the application server determines the updated end-to-end transmission delay requirement for the first data flow based on the target transmission delay requirement.

For example, in the updated end-to-end transmission delay requirement for the first data flow, the end-to-end transmission delay requirement may remain unchanged, but the uplink transmission delay requirement and the downlink transmission delay requirement change. For example, the end-to-end transmission delay requirement before the update is 10 milliseconds, the uplink transmission delay requirement before the update is 5 milliseconds, and the downlink transmission delay requirement before the update is 5 milliseconds, while the end-to-end transmission delay requirement after the update is 10 milliseconds, the uplink transmission delay requirement after the update is 3 milliseconds, and the downlink transmission delay requirement after the update is 7 milliseconds. Alternatively, the end-to-end transmission delay requirement may change. For example, the end-to-end transmission delay requirement before the update is 10 milliseconds, while the end-to-end transmission delay requirement after the update is 12 milliseconds.

In a possible example, the application server directly sends the first information to the policy control function network element.

In another possible example, the application server sends the first information to the policy control function network element via another network element. For example, the application server sends the first information to the policy control function network element via a network exposure function (NEF) network element. The application server sends a message "Nnef_AFsessionWithQoS Create request" to the network exposure function network element. The message "Nnef_AFsessionWithQoS Create request" includes the first information. The network exposure function network element performs an authentication (authorization) operation based on the message "Nnef_AFsessionWithQoS Create request". If the authentication succeeds, the network exposure function network element forwards the first information to the policy control function network element by using a message "Npcf_PolicyAuthorization Create request".

S2. Generate a policy and charging control PCC rule based on the first information, where the PCC rule indicates a QoS requirement for a first QoS flow and/or a QoS requirement for a second QoS flow, the QoS requirement for the first QoS flow includes an uplink transmission delay requirement for the first data flow, and the QoS requirement for the second QoS flow includes a downlink transmission delay requirement for the first data flow.

In step S2, after receiving the first information sent by the application server, the policy management function network element generates a policy and charging control (policy and charging control, PCC) rule based on the first information. The PCC rule indicates a QoS requirement for a first quality of service QoS flow and/or a QoS requirement for a second QoS flow, the QoS requirement for the first QoS flow includes an uplink transmission delay requirement for the first data flow from a first terminal device to a first user plane function network element, and the QoS requirement for the second QoS flow includes a downlink transmission delay requirement for the first data flow from a second user plane function network element to a second terminal device.

In a possible implementation, the PCC rule includes first indication information, the first indication information indicates the first terminal device to add, to a packet of the first data flow, first time information of the packet, and the first time information indicates time at which the first terminal device generates or sends the packet. The first indication information may further indicate another network element or device to process the packet of the first data flow. The following describes examples.

Example 1: When the first terminal device receives the first indication information, the first terminal device may determine the first QoS flow based on the QoS requirement for the first QoS flow, and then determine a packet transmitted in the first QoS flow. The first terminal device adds, based on the first indication information, first time information to the packet transmitted in the first QoS flow. The first time information indicates time at which the first terminal device generates or sends the packet. The first terminal device transmits the packet to which the first time information is added to a network side through the first QoS flow (for example, through a data radio bearer (data radio bearer, DRB) corresponding to the first QoS flow).

Example 2: When the user plane function network element (for example, the first user plane function network element) receives the first indication information, the user plane function network element may determine the first data flow according to a packet detection rule for the first data flow. Then, the user plane function network element extracts first time information from a packet of the first data flow based on the first indication information. Then, the user plane function network element re-adds the first time information to the packet, for example, adds the first time information to a general packet radio service tunneling protocol-user plane (general packet radio service tunneling protocol-user plane, GTP-U) packet header of the packet. The user plane function network element forwards, to the second terminal device through the first data flow, the packet of the first data flow to whose GTP-U packet header the first time information is added.

Example 3: When an access network device receives the first indication information, the access network device may configure or modify, based on the QoS parameter of the first QoS flow, the first QoS flow used to carry the first data flow, and then send a packet of the first data flow to the second terminal device within a sending delay budget for the packet based on the first indication information. The sending delay budget for the packet is determined based on the end-to-end transmission delay requirement for the first data flow and first time information of the packet.

In a possible implementation, the PCC rule further includes an end-to-end transmission delay budget for the first data flow, and the end-to-end transmission delay budget is a transmission delay budget for data transmission between the first terminal device and the second terminal device. The first information may further include the uplink transmission delay requirement for the first data flow and/or the downlink transmission delay requirement for the first data flow.

In a possible implementation, if the first information further includes a first transmission delay value between the application server and the first user plane function network element and a second transmission delay value between the application server and the second user plane function network element, when the PCC rule is generated based on the first information, the first transmission delay value and/or the second transmission delay value further need/needs to be considered. For example, the policy management function network element obtains, from the first information, the first transmission delay value from the application server to the first user plane function network element, and determines the QoS requirement for the first QoS flow based on the first information and the first transmission delay value; and/or the policy management function network element obtains the second transmission delay value from the application server to the second user plane function network element, and determines the QoS requirement for the second QoS flow based on the first information and the second transmission delay value. The uplink transmission delay requirement for the first data flow that is indicated by the QoS requirement for the first QoS flow and the downlink transmission delay requirement for the first data flow that is indicated by the QoS requirement for the second QoS flow meet that a sum of the uplink transmission delay requirement, the first transmission delay value, the downlink transmission delay requirement, and the second transmission delay value is less than or equal to the end-to-end transmission delay requirement.

Optionally, the PCC rule generated by the policy control function network element based on the first information may further include a first PCC rule and a second PCC rule. The first PCC rule indicates the QoS requirement for the first QoS flow, and the second PCC rule indicates the QoS requirement for the second QoS flow.

Optionally, when the network includes a first session management function network element and a second session management function network element, the policy control function network element may respectively send the first PCC rule to the first session management function network element and send the second PCC rule to the second session management function network element. The first session management function network element corresponds to the first terminal device, and the second session management function network element corresponds to the second terminal device.

Optionally, when the network includes a first policy control function network element and a second policy control function network element, that the policy control function network element generates the first PCC rule and the second PCC rule based on the first information may include: The first policy control function network element and the second policy control function network element generate the first PCC rule and the second PCC rule through negotiation based on the first information. The first policy control function network element and the second policy control function network element generate the first PCC rule and the second PCC rule through negotiation based on the end-to-end transmission delay requirement for the first data flow that is indicated by the first information. The first PCC rule and the second PCC rule meet that a sum of an uplink transmission delay requirement for the first data flow that is indicated by the first PCC rule and a downlink transmission delay requirement for the first data flow that is indicated by the second PCC rule is less than or equal to the end-to-end transmission delay requirement for the first data flow. In an example, the uplink transmission delay requirement for the first data flow that is indicated by the first PCC rule is equal to the downlink transmission delay requirement for the first data flow that is indicated by the second PCC rule.

Optionally, after generating the PCC rule, the policy control function network element may further determine a transmission delay requirement set according to the PCC rule. The transmission delay requirement set includes one or more transmission delay requirement combinations, and each transmission delay requirement combination includes an uplink transmission delay requirement for the first data flow and/or a downlink transmission delay requirement for the first data flow. Then, the policy control function network element reports the transmission delay requirement set to the application server, so that the application server determines the uplink transmission delay requirement for the first data flow and/or the downlink transmission delay requirement for the first data flow based on the transmission delay requirement set. Alternatively, the policy control function network element may determine the transmission delay requirement set based on the first information after receiving the first information. This is not limited in this embodiment of this application.

Further, optionally, the policy control function network element may further send a first subscription request to another network element (or device). The first subscription request is used to request provision of a first notification service. The first notification service is sending a first notification message when a transmission delay of the first data flow is greater than or equal to a first threshold. The policy control function network element updates the uplink transmission delay requirement for the first data flow and/or the downlink transmission delay requirement for the first data flow based on the received first notification message. The policy control function network element determines an updated uplink transmission delay requirement for the first data flow and/or an updated downlink transmission delay requirement for the first data flow, and updates the PCC rule based on the updated uplink transmission delay requirement for the first data flow and/or the updated downlink transmission delay requirement for the first data flow, for example, updates the QoS requirement for the first QoS flow and/or the QoS requirement for the second QoS flow that are/is included in the PCC rule.

Optionally, the first subscription request includes the first threshold.

Optionally, the first subscription request includes description information of the first data flow.

In an example, the policy control function network element sends the first subscription request to the application server. When the application server detects that the transmission delay of the first data flow is greater than or equal to the first threshold, the application server sends the first notification message to the policy control function network element. For example, the application server obtains the first time information and the second time information of the first packet in the first data flow. Then, the application server determines, based on the first time information, the second time information, and the first threshold, whether the end-to-end transmission delay requirement for the first data flow needs to be updated. If determining that the end-to-end transmission delay requirement for the first data flow needs to be updated, the application server sends the first notification message to the policy control function network element.

In another example, after determining a target transmission delay requirement combination from the transmission delay requirement set, the application server determines the uplink transmission delay requirement for the first data flow and/or the downlink transmission delay requirement for the first data flow based on the target transmission delay requirement combination. The application server may further send a second notification message to the policy control function network element. The second notification message indicates the target transmission delay requirement combination. For example, the second notification message includes an index of the target transmission delay requirement combination. The policy control function network element determines the target transmission delay requirement combination based on the second notification message, and then updates the uplink transmission delay requirement for the first data flow and/or the downlink transmission delay requirement for the first data flow based on the target transmission delay requirement combination.

In another example, the policy control function network element sends the first subscription request to the user plane function network element. When the user plane function network element detects that the transmission delay of the first data flow is greater than or equal to the first threshold, the user plane function network element sends the first notification message to the policy control function network element. For example, the user plane function network element obtains the first time information and third time information of the first packet in the first data flow. The third time information indicates time at which the user plane function receives the first packet. Then, the user plane function network element determines, based on the first time information, the third time information, and the first threshold, whether the end-to-end transmission delay requirement for the first data flow needs to be updated. If determining that the end-to-end transmission delay requirement for the first data flow needs to be updated, the user plane function network element sends the first notification message to the policy control function network element.

Further, optionally, the policy control function network element may further obtain the time at which the first terminal device sends or generates the first packet. Then, the policy control function network element updates the PCC rule based on the time at which the first terminal device sends or generates the first packet. For example, the policy control function network element updates the second PCC rule. Further, optionally, the policy control function network element may further obtain the time at which the first user plane function network element receives the first packet or the time at which the application server receives the first packet, and update the PCC rule.

S3. The policy control function network element sends the PCC rule to a session management function network element.

In step S3, after the policy control function network element generates the PCC rule, the policy control function network element sends the PCC rule to a session management function network element.

In an example, the policy control function network element sends the first PCC rule and the second PCC rule to the session management function network element.

In another example, the policy control function network element sends the first PCC rule to a first session management function network element, and sends the second PCC rule to a second session management function network element.

In another example, the first policy control function network element sends the first PCC rule to the first session management function network element, and the second policy control function network element sends the second PCC rule to the second session management function network element.

S4. The session management function network element obtains third information according to the PCC rule, where the third information includes the QoS requirement for the first QoS flow and/or the QoS requirement for the second QoS flow, the QoS requirement for the first QoS flow includes the uplink transmission delay requirement for the first data flow, and the QoS requirement for the second QoS flow includes the downlink transmission delay requirement for the first data flow.

In step S4, after receiving the PCC rule, the session management function network element obtains third information according to the PCC rule. The third information includes the QoS requirement for the first QoS flow and/or the QoS requirement for the second QoS flow, the QoS requirement for the first QoS flow includes the uplink transmission delay requirement for the first data flow, and the QoS requirement for the second QoS flow includes the downlink transmission delay requirement for the first data flow.

The session management function network element may obtain different third information according to the PCC rule, and then sends the different third information to different network elements or devices. The following separately provides descriptions.

In a possible implementation, the third information includes a QoS rule for the first QoS flow. The session management function network element generates the QoS rule for the first QoS flow according to the PCC rule. Then, the session management function network element sends the QoS rule for the first QoS flow to the first terminal device. The QoS rule for the first QoS flow indicates the first terminal device to add, to a packet transmitted in the first data flow, time at which the first terminal device sends or generates the packet.

Optionally, the QoS rule for the first QoS flow includes first indication information, and the first indication information indicates to provide an end-to-end delay guarantee service for the first data flow, so that based on the first indication information, the first terminal device adds, to a packet transmitted in the first QoS flow, information about time at which the first terminal device sends or generates the packet. Alternatively, the third information includes the first indication information.

Optionally, that the session management function network element generates the QoS rule for the first QoS flow according to the PCC rule includes: The first session management function network element generates the QoS rule for the first QoS flow according to the first PCC rule. Then, the first session management function network element sends the QoS rule for the first QoS flow to the first terminal device.

In a possible implementation, the session management function network element sends the third information to an access network device, the third information includes an end-to-end transmission delay for the first data flow, the end-to-end transmission delay for the first data flow indicates an upper transmission time limit value for a packet in the first data flow, and the access network device provides a communication service for the second terminal device.

In another possible implementation, the session management function network element sends the third information to an access network device, and the third information includes the uplink transmission delay requirement for the first data flow and the downlink transmission delay requirement for the first data flow. For example, the session management function network element sends the uplink transmission delay requirement for the first data flow to a first access network device, and sends the downlink transmission delay requirement for the first data flow to a second access network device. In another example, the first session management function network element sends the uplink transmission delay requirement for the first data flow to the first access network device, and the first session management function network element sends the downlink transmission delay requirement for the first data flow to the second access network device.

In a possible implementation, the session management function network element sends the third information to an access network device, the third information includes the QoS parameter of the first QoS flow and/or the QoS parameter of the second QoS flow, the QoS parameter of the first QoS flow includes the uplink transmission delay requirement for the first data flow from the first terminal device to the first user plane function network element, and the QoS parameter of the second QoS flow includes the downlink transmission delay requirement for the first data flow from the second user plane function network element to the second terminal device. For example, the session management function network element sends the QoS parameter of the first QoS flow to the first access network device, and sends the QoS parameter for the second QoS flow to the second access network device. In another example, the first session management function network element sends the QoS parameter of the first QoS flow to the first access network device, and the first session management function network element sends the QoS requirement for the second QoS flow to the second access network device. For example, when generating or modifying the first QoS flow and the second QoS flow for the first data flow, the session management function network element generates (or modifies) the QoS parameter of the first QoS flow and/or the QoS parameter of the second QoS flow.

In a possible implementation, the session management function network element sends the third information to the user plane function network element, the third information includes a packet detection rule for the first data flow and/or a QoS enforcement rule for the first data flow, and the QoS enforcement rule for the first data flow indicates the user plane function network element to add, to a packet of the first data flow, time at which the first terminal device generates or sends the packet.

Step S5, step S9, and/or step S11 are performed after step S4.

S5. The session management function network element sends the third information to the first terminal device.

In step S5, the session management function network element sends the third information to the first terminal device. The third information includes a QoS rule for the first QoS flow. The QoS rule for the first QoS flow indicates the first terminal device to add, to a packet transmitted in the first data flow, time at which the first terminal device sends or generates the packet.

For example, the session management function network element sends the QoS rule for the first QoS flow to the first terminal device via an access and mobility management function network element and an access network device. The QoS rule for the first QoS flow is carried in a message "N2 message" and a message "NAS message".

Step S6 is performed after step S5.

S6. The first terminal device adds first time information to a to-be-sent packet of the first data flow based on the third information.

In step S6, the first terminal device determines a to-be-sent packet of the first data flow according to the QoS rule for the first QoS flow. Then, the first terminal device adds first time information to the to-be-sent packet of the first data flow based on the first indication information. For example, the first terminal device adds the first time information of the first packet to the first packet (the first packet is a to-be-sent packet of the first data flow, and the first packet is carried in the first QoS flow) according to the QoS rule for the first QoS flow. The first time information of the first packet indicates the time at which the first terminal device generates or sends the first packet.

Optionally, the first time information of the first packet may alternatively be carried in another packet of the first data flow.

S7. The first terminal device sends the first packet, where the first packet is carried in the first data flow.

In step S6, the first terminal device sends the first packet. The first packet includes the first time information of the first packet, and the first packet is carried in the first data flow.

It should be noted that step S8-1 to step S8-2 are optional steps. When the first data flow passes through the application server, step S8-2 to step S8-2 are performed. That is, when a data network is involved, step S8-2 to step S8-2 are performed. When the first data flow does not pass through the application server, for example, after the first packet of the first data flow is sent from the first terminal device, the first packet reaches the second terminal device through the first user plane function network element and the second user plane function network element, step S8-2 to step S8-2 are not performed.

S8-1. The user plane function network element forwards the first packet to the application server, where the first packet is carried in the first data flow.

In step S8-1, after the user plane function network element receives the first packet sent by the first terminal device, the user plane function network element sends the first packet to the application server. For example, after the first user plane function network element receives the first packet sent by the first terminal device, the first user plane function network element sends the first packet to the application server.

S8-2. The application server sends the first packet to the user plane function network element.

In step S8-2, after receiving the first packet forwarded by the user plane function network element, the application server may perform related processing based on the first packet and then send the first packet to the second terminal device, or may directly forward the first packet to the second terminal device.

In an example, the first packet sent by the application server to the user plane function network element may be a first packet generated by modifying address information based on the first packet sent by the first terminal device.

In another example, the application server may alternatively generate (or determine) a second packet based on the first packet from the first terminal device. The second packet has an association relationship with the first packet. For example, the second packet is a packet generated by the application server based on the first packet. For another example, the second packet includes service data carried in the first packet. Then, the application server sends the second packet to the second terminal device.

S9. The session management function network element sends the third information to the user plane function network element device.

In step S9, that the session management function network element sends the third information to the user plane function network element includes: The session management function network element sends the third information to the user plane function network element, the third information includes a packet detection rule for the first data flow and/or a QoS enforcement rule for the first data flow, and the QoS enforcement rule for the first data flow indicates the user plane function network element to add, to a packet of the first data flow, time at which the first terminal device generates or sends the packet.

S10. The user plane function network element adds the first time information to the first packet based on the third information.

In step S10, that the session management function network element sends the third information to the user plane function network element includes: The session management function network element sends the third information to the user plane function network element, and the third information includes the packet detection rule for the first data flow and/or the QoS enforcement rule (QoS enforcement rule, QER) for the first data flow.

Specifically, the user plane function network element determines, from a plurality of packets according to the packet detection rule for the first data flow, a packet that belongs to the first data flow. Then, the user plane function network element reads, from the packet of the first data flow according to the QER for the first data flow, time at which the first terminal device sends or generates the packet. The user plane function network element generates first time information based on the time at which the first terminal device sends or generates the packet, and then adds the first time information to the packet, for example, adds the first time information to a GTP-U packet header of the packet.

Step S13 is performed after step S10.

S11. The session management function network element sends the third information to an access network device.

For the third information sent by the session management function network element to the access network device in step S11, refer to the foregoing step S4. Details are not described herein again.

S12. The access network device determines the end-to-end transmission delay requirement for the first data flow based on the third information.

In step S12, the access network device determines the end-to-end transmission delay requirement for the first data flow based on the third information, and then determines an end-to-end transmission delay for the first data flow (a P2P delay budget for the first data flow) based on the end-to-end transmission delay requirement for the first data flow.

Optionally, the access network device may alternatively obtain the end-to-end transmission delay requirement for the first data flow from the application server.

S13. The user plane function network element sends the first packet to the access network device.

Step S14 is performed after step S13.

S14. The access network device determines a sending delay budget for the first packet based on the end-to-end transmission delay requirement for the first data flow and the first time information of the first packet.

In step S14, after the access network device determines the end-to-end transmission delay for the first data flow based on the end-to-end transmission delay requirement for the first data flow, the access network device determines a first time period of a packet in the first data flow based on the end-to-end transmission delay for the first data flow, first time information of the packet, and time at which the packet is received by the access network device. The first time period indicates a transmission time of transmitting the packet from the first terminal device to the access network device. Then, the access network device determines a sending delay budget for the packet based on the first time period of the packet and the end-to-end transmission delay for the first data flow.

The following uses the first packet as an example for description. The first time information of the first packet indicates 10 milliseconds, time at which the first packet (sent from the second user plane function network element to the access network device) is received by the access network device is 20 milliseconds, and the end-to-end transmission delay requirement for the first data flow is 25 milliseconds. In this case, it may be determined, based on the foregoing information, that a first time period of the packet is 20-10=10 milliseconds, and a sending delay budget for the first packet is 25-10=15 milliseconds. Based on the sending delay budget for the first packet, the access network device needs to send the first packet to the second terminal device within 15 milliseconds.

Optionally, when determining the sending delay budget for the first data flow, the access network device may further consider an air interface delay from the access network device to the second terminal device. The access network device determines the sending delay budget for the packet based on the end-to-end transmission delay for the first data flow, the air interface transmission delay from the access network device to the second terminal device, and the first time period of the packet.

The following uses the first packet as an example for description. The first time information of the first packet indicates 10 milliseconds, the time at which the first packet (sent from the second user plane function network element to the access network device) is received by the access network device is 20 milliseconds, the end-to-end transmission delay requirement for the first data flow is 25 milliseconds, and the air interface transmission delay from the access network device to the second terminal device is 5 milliseconds. In this case, it may be determined, based on the foregoing information, that a first time period of the packet is 20-10=10 milliseconds, and a sending delay budget for the first packet is 25-10-5=10 milliseconds. Based on the sending delay budget for the first packet, the access network device needs to send the first packet to the second terminal device within 10 milliseconds.

Optionally, when the sending delay budget for the packet is less than or equal to a second threshold, the access network device may discard the packet.

S15. The access network device sends the first packet to the second terminal device within the sending delay budget for the first packet.

In step S15, when the access network device locally buffers a plurality of to-be-sent packets in the first data flow, that is, a plurality of packets of the first data flow arrive at the access network device in the downlink direction, and the access network device has not sent the to-be-sent packets to the second terminal device, the access network device may determine, based on sending delay budgets for the to-be-sent packets, priorities of sending the to-be-sent packets. A first packet of the first data flow and a third packet of the first data flow are used as examples for description. After receiving the first packet, the access network device determines a sending delay budget for the first packet. After receiving the third packet, the access network device determines a sending delay budget for the third packet. If the sending delay budget for the first packet is less than the sending delay budget for the third packet, the access network device preferentially sends the first packet to the second terminal device.

In this embodiment of this application, an application server may send an end-to-end transmission delay requirement for a first data flow to network elements or devices in a network. The end-to-end transmission delay requirement for the first data flow is a transmission delay requirement for data transmission between a first terminal device and a second terminal device. The first terminal device may add, to a packet of the first data flow, first time information indicating time at which the first terminal device generates or sends the packet. A user plane function network element or the application server may re-add the first time information inside the packet to an outer packet header for easy identification, for example, add the first time information to a GTP-U packet header of the packet. An access network device sends the packet to the second terminal device within a sending delay budget for the packet based on receiving time at which the packet is received, the time that is indicated by the first time information and at which the first terminal device sends or generates the packet, and the end-to-end transmission delay requirement for the first data flow. Through collaboration between network elements or devices, end-to-end delay guarantee between the terminal devices is implemented, various service requirements are met, and communication quality is improved.

With reference to the foregoing embodiment, in embodiments of this application, the policy management function network element updates the end-to-end transmission delay requirement for the first data flow based on a notification message of the application server and/or the user plane function network element. Specifically, the following provides descriptions with reference to accompanying drawings.

Manner 1: The policy management function network element requests the application server to provide a first notification service.

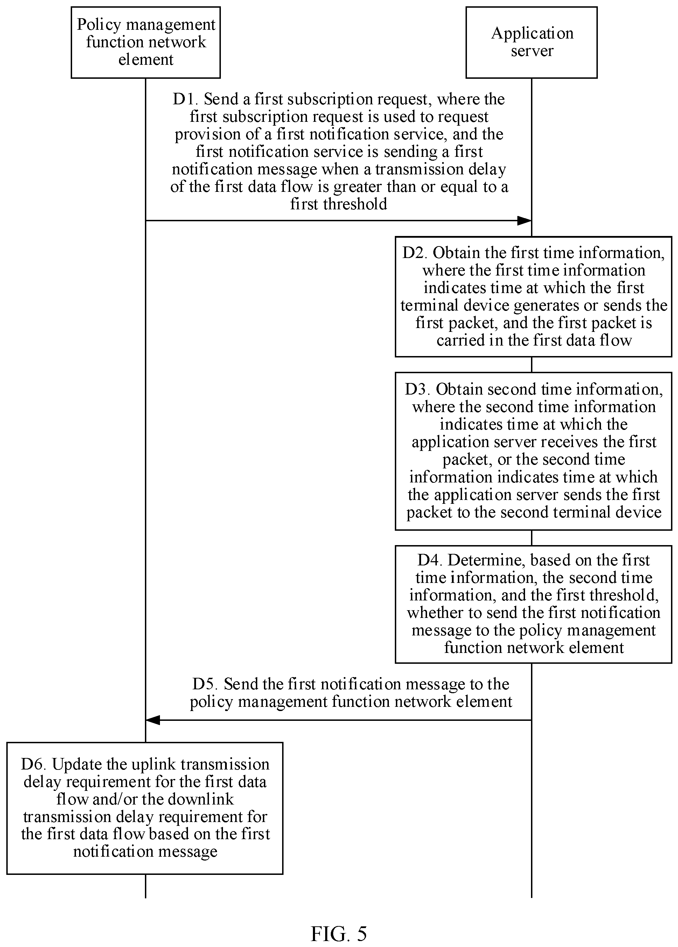

FIG. 5 is another schematic flowchart of an embodiment of a delay control method according to embodiments of this application. The delay control method provided in this embodiment of this application further includes the following steps.

D1. The policy management function network element sends a first subscription request to the application server, where the first subscription request is used to request provision of a first notification service, and the first notification service is sending a first notification message when a transmission delay of the first data flow is greater than or equal to a first threshold.

In step D1, the policy control function network element may further send a first subscription request to the application server. The first subscription request is used to request the application server to provide a first notification service, and the first notification service is that the application server sends a first notification message to the policy management function network element when detecting that a transmission delay of the first data flow is greater than or equal to a first threshold. The policy control function network element updates the uplink transmission delay requirement for the first data flow and/or the downlink transmission delay requirement for the first data flow based on the received first notification message.

Optionally, the first subscription request includes the first threshold.

Optionally, the first subscription request includes description information of the first data flow.

It may be understood that, for different data flows, the policy control function network element may send different first subscription requests to different application servers, or send, to a same application server, first subscription requests that carry different thresholds.

For example, for the first data flow, the first threshold carried in the first subscription request corresponding to the first data flow is 10 milliseconds, which means that if a remaining available transmission time of a packet in the first data flow at the application server (determined by receiving time at which the application server receives the packet minus time at which the first terminal device sends or generates the packet) is less than or equal to 10 milliseconds, the application server sends the first notification message corresponding to the first data flow to the policy control function network element.

For a second data flow, a first threshold carried in a first subscription request corresponding to the second data flow is 5 milliseconds, which means that if a remaining available transmission time of a packet in the second data flow at the application server (determined by receiving time at which the application server receives the packet minus time at which the first terminal device sends or generates the packet) is less than or equal to 5 milliseconds, the application server sends a first notification message corresponding to the second data flow to the policy control function network element.

D2. The application server obtains the first time information, where the first time information indicates the time at which the first terminal device generates or sends the first packet, and the first packet is carried in the first data flow.

In step D2, after receiving the first packet, the application server obtains the first time information.

D3. The application server obtains the second time information, where the second time information indicates the time at which the application server receives the first packet, or the second time information indicates the time at which the application server sends the first packet to the second terminal device.

In step D3, after receiving the first packet, the application server obtains the second time information.

An execution sequence of step D2 and step D3 is not limited in this embodiment of this application.

D4. The application server determines, based on the first time information, the second time information, and the first threshold, whether to send the first notification message to the policy management function network element.

In step D4, the application server determines a remaining available transmission time of the first packet based on the first time information and the second time information, then determines, based on the remaining available transmission time of the first packet and the first threshold, whether to update the end-to-end transmission delay requirement for the first data flow, and determines whether to send the first notification message to the policy management function network element.

In a possible example, when the remaining available transmission time of the first packet is less than or equal to the first threshold, the first notification message is sent to the policy management function network element. When the remaining available transmission time of the first packet is greater than the first threshold, the first notification message is not sent.

D5. The application server sends the first notification message to the policy management function network element.

D6. The policy management function network element updates the uplink transmission delay requirement for the first data flow and/or the downlink transmission delay requirement for the first data flow based on the first notification message.

In step D6, the policy management function network element updates the uplink transmission delay requirement for the first data flow and/or the downlink transmission delay requirement for the first data flow based on the first notification message. For example, when the end-to-end transmission delay requirement for the first data flow remains unchanged, the policy management function network element increases the uplink transmission delay requirement for the first data flow, and decreases the downlink transmission delay requirement for the first data flow. For another example, when the end-to-end transmission delay requirement for the first data flow remains unchanged, the policy management function network element decreases the uplink transmission delay requirement for the first data flow, and increases the downlink transmission delay requirement for the first data flow. For another example, the policy management function network element increases the end-to-end transmission delay requirement for the first data flow, and correspondingly increases the uplink transmission delay requirement for the first data flow and the downlink transmission delay requirement for the first data flow.

In this embodiment of this application, the policy management function network element may subscribe to the first notification service from the application server, to update the end-to-end transmission delay requirement for the first data flow in time based on the first notification message of the application server, thereby improving delay guarantee performance, ensuring normal service running, and improving communication quality.

Manner 2: The policy management function network element sends a transmission delay requirement set to the application server, to request the application server to indicate a target transmission delay requirement combination to the policy management function.

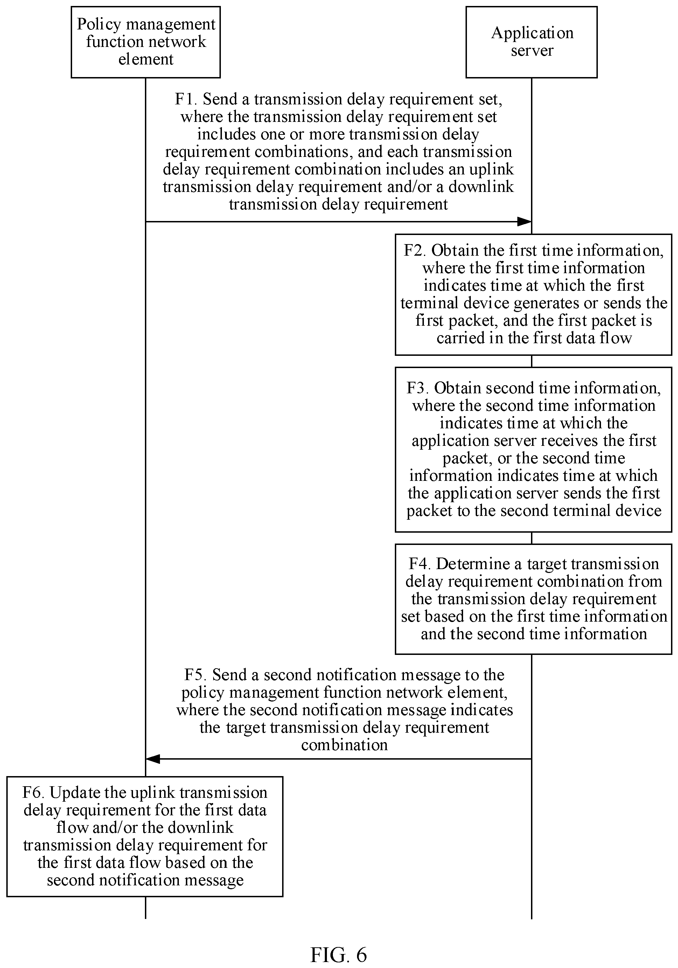

FIG. 6 is another schematic flowchart of an embodiment of a delay control method according to embodiments of this application. The delay control method provided in this embodiment of this application further includes the following steps.

F1. The policy management function network element sends a transmission delay requirement set to the application server, where the transmission delay requirement set includes one or more transmission delay requirement combinations, and each transmission delay requirement combination includes an uplink transmission delay requirement and/or a downlink transmission delay requirement.

In step F1, after receiving the end-to-end transmission delay requirement for the first data flow that is sent by the application server, the policy management function network element may generate a transmission delay requirement set corresponding to the end-to-end transmission delay requirement for the first data flow. For example, the end-to-end transmission delay requirement for the first data flow is 20 milliseconds, and the transmission delay requirement set is shown in Table 1.

**Table 1**

| Index | Uplink transmission delay requirement (ms) for the first data flow | Downlink transmission delay requirement (ms) for the first data flow |
|---|---|---|
| 1 | 10 | 10 |
| 2 | 8 | 12 |
| 3 | 12 | 8 |
| 4 | 15 | 5 |
| 5 | 5 | 15 |

For example, the policy management function network element sends, to the application server, an index of a transmission delay requirement combination in the transmission delay requirement set and/or the transmission delay requirement combination corresponding to the index, or the policy management function network element sends a complete transmission delay requirement combination to the application server.

F2. The application server obtains the first time information, where the first time information indicates the time at which the first terminal device generates or sends the first packet, and the first packet is carried in the first data flow.

F3. The application server obtains the second time information, where the second time information indicates the time at which the application server receives the first packet, or the second time information indicates the time at which the application server sends the first packet to the second terminal device.

Step F2 to step F3 are the same as the foregoing step D2 to step D3, and details are not described herein again.

F4. The application server determines a target transmission delay requirement combination from the transmission delay requirement set based on the first time information and the second time information.

In step F4, in an example, the application server determines a remaining available transmission time of the first packet based on the first time information and the second time information, and then determines a target transmission delay requirement combination from the transmission delay requirement set based on the remaining available transmission time of the first packet. With reference to Table 1, when the remaining available transmission time of the first packet is 12 milliseconds, the transmission delay requirement combination with the index 2 is selected as the target transmission delay requirement combination.

Optionally, the application server may update the first information based on the target transmission delay requirement combination, for example, update the uplink transmission delay requirement for the first data flow and/or the downlink transmission delay requirement for the first data flow that are/is indicated by the first information.

F5. The application server sends a second notification message to the policy management function network element, where the second notification message indicates the target transmission delay requirement combination.

In step F5, the second notification message may include the target transmission delay requirement combination or an index (or identification information) or the like of the target transmission delay requirement combination.

F6. The policy management function network element updates the uplink transmission delay requirement for the first data flow and/or the downlink transmission delay requirement for the first data flow based on the second notification message.

In step D6, the policy management function network element determines the target transmission delay requirement combination based on the second notification message, and then updates the uplink transmission delay requirement for the first data flow and/or the downlink transmission delay requirement for the first data flow based on the target transmission delay requirement combination.

In this embodiment of this application, the policy management function network element may send, to the application server, the transmission delay requirement set related to the first data flow, so that the application server updates the end-to-end transmission delay requirement for the first data flow based on the transmission delay requirement set, thereby improving delay guarantee performance, ensuring normal service running, and improving communication quality.

Manner 3: The policy management function network element requests the user plane function network element to provide a first notification service.

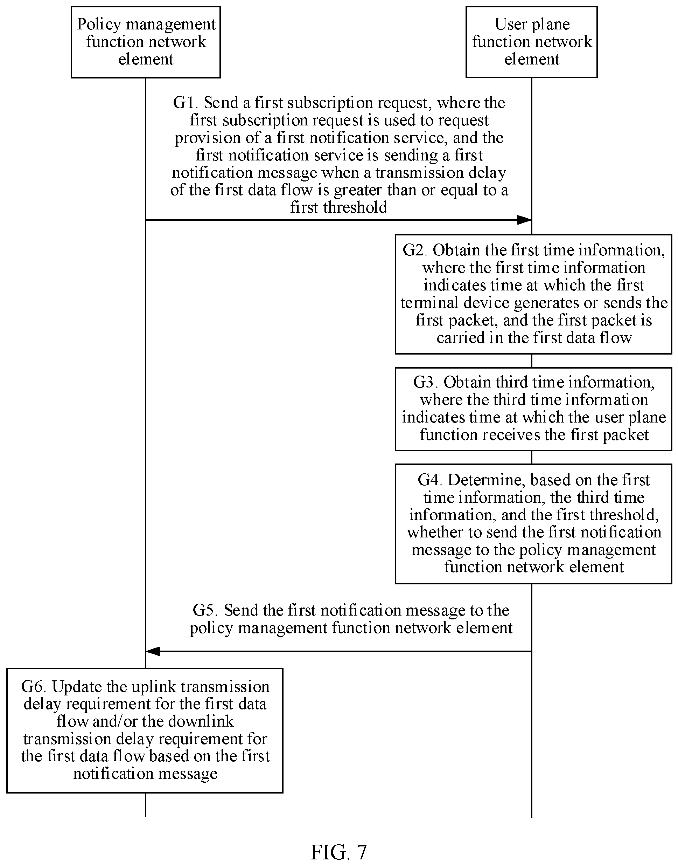

FIG. 7 is another schematic flowchart of an embodiment of a delay control method according to embodiments of this application. The delay control method provided in this embodiment of this application further includes the following steps.

G1. The policy management function network element sends a first subscription request to the user plane function network element, where the first subscription request is used to request provision of a first notification service, and the first notification service is sending a first notification message when a transmission delay of the first data flow is greater than or equal to a first threshold.

In step G1, the policy control function network element may further send a first subscription request to the user plane function network element. The first subscription request is used to request the user plane function network element to provide a first notification service, and the first notification service is that the user plane function network element sends a first notification message to the policy management function network element when detecting that a transmission delay of the first data flow is greater than or equal to a first threshold. The policy control function network element updates the uplink transmission delay requirement for the first data flow and/or the downlink transmission delay requirement for the first data flow based on the received first notification message.

Optionally, the first subscription request includes the first threshold.

Optionally, the first subscription request includes description information of the first data flow.

G2. The user plane function network element obtains the first time information, where the first time information indicates the time at which the first terminal device generates or sends the first packet, and the first packet is carried in the first data flow.

In step G2, after receiving the first packet, the user plane function network element obtains the first time information.

G3. The user plane function network element obtains the third time information, where the third time information indicates the time at which the user plane function receives the first packet.

In step G3, after receiving the first packet, the user plane management function network element obtains the third time information.

An execution sequence of step G2 and step G3 is not limited in this embodiment of this application.

G4. The user plane function network element determines, based on the first time information, the third time information, and the first threshold, whether to send the first notification message to the policy management function network element.

In step G4, the user plane management function network element determines a remaining available transmission time of the first packet based on the first time information and the third time information, and then determines, based on the remaining available transmission time of the first packet and the first threshold, whether to send the first notification message to the policy management function network element.

In a possible example, when the remaining available transmission time of the first packet is less than or equal to the first threshold, the first notification message is sent to the policy management function network element. When the remaining available transmission time of the first packet is greater than the first threshold, the first notification message is not sent.

G5. The user plane function network element sends the first notification message to the policy management function network element.

G6. The policy management function network element updates the uplink transmission delay requirement for the first data flow and/or the downlink transmission delay requirement for the first data flow based on the first notification message.

In step G6, the policy management function network element updates the uplink transmission delay requirement for the first data flow and/or the downlink transmission delay requirement for the first data flow based on the first notification message. For example, when the end-to-end transmission delay requirement for the first data flow remains unchanged, the policy management function network element increases the uplink transmission delay requirement for the first data flow, and decreases the downlink transmission delay requirement for the first data flow. For another example, when the end-to-end transmission delay requirement for the first data flow remains unchanged, the policy management function network element decreases the uplink transmission delay requirement for the first data flow, and increases the downlink transmission delay requirement for the first data flow. For another example, the policy management function network element increases the end-to-end transmission delay requirement for the first data flow, and correspondingly increases the uplink transmission delay requirement for the first data flow and the downlink transmission delay requirement for the first data flow.

In this embodiment of this application, the policy management function network element may subscribe to the first notification service from the user plane management function network element, to update the end-to-end transmission delay requirement for the first data flow in time based on the first notification message of the user plane management function network element, thereby improving delay guarantee performance, ensuring normal service running, and improving communication quality.

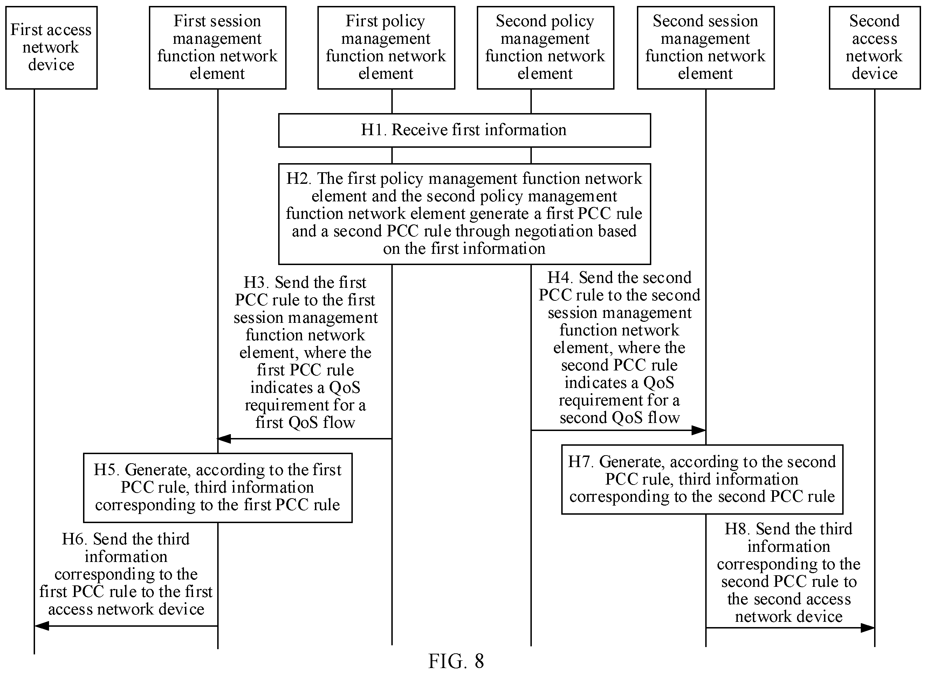

With reference to the foregoing embodiments, the policy management function network element in embodiments of this application may further include a first policy management function network element and a second policy management function network element. The first policy management function network element and the second policy management function network element may generate, through negotiation, a first PCC rule related to an uplink direction and a second PCC rule related to a downlink direction. FIG. 8 is another schematic flowchart of an embodiment of a delay control method according to embodiments of this application. The delay control method provided in this embodiment of this application further includes the following steps.

H1. The first policy management function network element and the second policy management function network element receive the first information.

H2. The first policy management function network element and the second policy management function network element generate a first PCC rule and a second PCC rule through negotiation based on the first information.

In step H2, a QoS requirement for a first QoS flow that is indicated by the first PCC rule and a QoS requirement for a second QoS flow that is indicated by the second PCC rule meet the following requirement: A sum of an uplink transmission delay requirement, included in the QoS requirement for the first QoS flow, for the first data flow from the first terminal device to the first user plane function network element, and a downlink transmission delay requirement, included in the QoS requirement for the second QoS flow, for the first data flow from the second user plane function network element to the second terminal device, is less than or equal to the end-to-end transmission delay requirement for the first data flow. For example, the end-to-end transmission delay requirement for the first data flow is 20 milliseconds, the uplink transmission delay requirement for the first data flow that is indicated by the first PCC rule is 10 milliseconds, and the downlink transmission delay requirement for the first data flow that is indicated by the second PCC rule is 10 milliseconds.

For another example, the first policy management function network element and the second policy management function network element adjust, based on an actual transmission status of a packet in the first data flow, the uplink transmission delay requirement for the first data flow that is indicated by the first PCC rule and the downlink transmission delay requirement for the first data flow that is indicated by the second PCC rule. For example, the end-to-end transmission delay requirement for the first data flow is 20 milliseconds, the uplink transmission delay requirement for the first data flow that is indicated by the first PCC rule is 15 milliseconds, and the downlink transmission delay requirement for the first data flow that is indicated by the second PCC rule is 5 milliseconds.

H3. The first policy management function network element sends the first PCC rule to the first session management function network element, where the first PCC rule indicates the QoS requirement for the first QoS flow.

H4. The second policy management function network element sends the second PCC rule to the second session management function network element, where the second PCC rule indicates the QoS requirement for the second QoS flow.

H5. The first session management function network element obtains, according to the first PCC rule, third information corresponding to the first PCC rule.

In step H5, the first session management function network element obtains, according to the first PCC rule, third information corresponding to the first PCC rule. This is similar to the foregoing step S4, and details are not described herein again.

H6. The first session management function network element sends the third information corresponding to the first PCC rule to the first access network device.

H7. The second session management function network element obtains, according to the second PCC rule, third information corresponding to the second PCC rule.

In step H7, the second session management function network element obtains, according to the second PCC rule, third information corresponding to the second PCC rule. This is similar to the foregoing step S4, and details are not described herein again.

H8. The second session management function network element sends the third information corresponding to the second PCC rule to the second access network device.

In this embodiment of this application, alternatively, when the network includes a plurality of policy management function network elements, a plurality of PCC rules related to the end-to-end transmission delay requirement for the first data flow may be generated through negotiation, thereby improving implementation flexibility of the solution, and meeting requirements of different services.

The foregoing describes this application from a method perspective, and the following further describes other embodiments provided in this application.

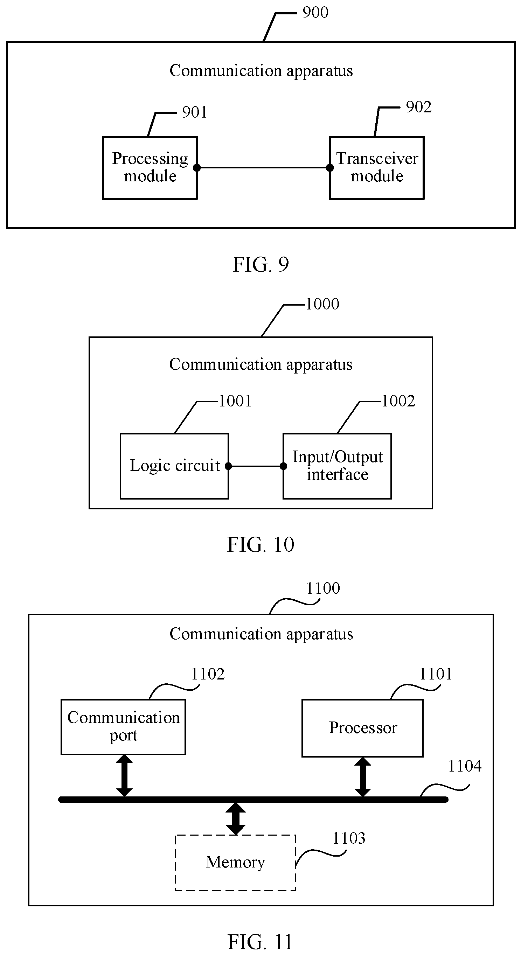

FIG. 9 is a diagram of an implementation of a communication apparatus according to this application. The communication apparatus 900 includes a processing module 901 and a transceiver module 902. The communication apparatus 900 can implement functions of the communication apparatus (including the application server, the user plane function network element, the session management function network element, the policy management function network element, the access network device, and/or the like) in the foregoing method embodiments, and therefore can also achieve the beneficial effects of the foregoing method embodiments. In this embodiment of this application, the communication apparatus 900 may be the application server, the user plane function network element, the session management function network element, the policy management function network element, and/or the access network device, or may be an integrated circuit, an element, or the like in the application server, the user plane function network element, the session management function network element, the policy management function network element, and/or the access network device, for example, a chip, or may be an integrated circuit or an element integrated with the application server, the user plane function network element, the session management function network element, the policy management function network element, and/or the access network device.

FIG. 10 is another diagram of a structure of a communication apparatus 1000 according to this application. The communication apparatus 1000 includes at least an input/output interface 1002. The communication apparatus 1000 may be a chip or an integrated circuit.

Optionally, the communication apparatus further includes a logic circuit 1001.

The transceiver module 902 shown in FIG. 9 may be a communication interface, the communication interface may be the input/output interface 1002 in FIG. 10, and the input/output interface 1002 may include an input interface and an output interface. Alternatively, the communication interface may be a transceiver circuit, and the transceiver circuit may include an input interface circuit and an output interface circuit.

Optionally, when the communication apparatus 1000 is the application server, the user plane function network element, the session management function network element, the policy management function network element, and/or the access network device in the foregoing embodiments, the input/output interface 1002 is configured to input/output information, and the logic circuit 1001 is configured to perform the method performed by the application server, the user plane function network element, the session management function network element, the policy management function network element, and/or the access network device in the foregoing embodiments.

The logic circuit 1001 and the input/output interface 1002 may further perform other steps performed by the communication apparatus in any embodiment and achieve corresponding beneficial effects. Details are not described herein again.

In a possible implementation, the processing module 901 shown in FIG. 9 may be the logic circuit 1001 in FIG. 10.

Optionally, the logic circuit 1001 may be a processing apparatus, and a part of or all functions of the processing apparatus may be implemented by using software. A part of or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. The memory configured to store the computer program is located outside the processing apparatus, and the processor is connected to the memory by using a circuit/cable, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate array, FPGA), application-specific integrated circuits (application-specific integrated circuit, ASIC), systems on chips (system on chip, SoC), central processing units (central processing unit, CPU), network processors (network processor, NP), digital signal processing circuits (digital signal processor, DSP), microcontroller units (microcontroller unit, MCU), programmable logic devices (programmable logic device, PLD), or other integrated chips, or any combination of the foregoing chips or processors.

FIG. 11 shows a communication apparatus 1100 related to the foregoing embodiments according to an embodiment of this application. The communication apparatus 1100 may be specifically the communication apparatus used as an application server, a user plane function network element, a session management function network element, a policy management function network element, and/or an access network device in the foregoing embodiments.

In a possible diagram of a logic structure of the communication apparatus 1100, the communication apparatus 1100 may include but is not limited to at least one processor 1101 and a communication port 1102.

Further, optionally, the apparatus may further include at least one of a memory 1103 and a bus 1104. In this embodiment of this application, the at least one processor 1101 is configured to control actions of the communication apparatus 1100.

In addition, the processor 1101 may be a central processing unit, a general-purpose processor, a digital signal processor, an application-specific integrated circuit, a field-programmable gate array or another programmable logic device, a transistor logic device, a hardware component, or any combination thereof. The processor can implement or execute various example logical blocks, modules, and circuits described with reference to content disclosed in this application. Alternatively, the processor may be a combination for implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 1100 shown in FIG. 11 may be specifically configured to implement steps implemented by the application server, the user plane function network element, the session management function network element, the policy management function network element, and/or the access network device in the foregoing method embodiments, and achieve technical effects corresponding to the application server, the user plane function network element, the session management function network element, the policy management function network element, and/or the access network device. For specific implementations of the communication apparatus shown in FIG. 11, refer to descriptions in the foregoing method embodiments. Details are not described herein again.

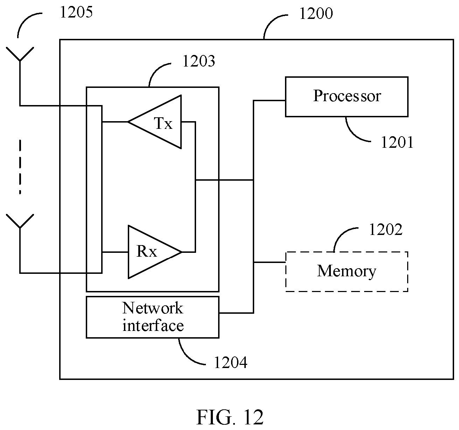

FIG. 12 is a diagram of a structure of a communication apparatus 1200 related to the foregoing embodiments according to an embodiment of this application. The communication apparatus 1200 may be specifically the communication apparatus used as an application server, a user plane function network element, a session management function network element, a policy management function network element, and/or an access network device in the foregoing embodiments. For a structure of the communication apparatus, refer to the structure shown in FIG. 12.

The communication apparatus 1200 includes at least one processor 1201 and at least one network interface 1204. Further, optionally, the communication apparatus further includes at least one memory 1202, at least one transceiver 1203, and one or more antennas 1205. The processor 1201, the memory 1202, the transceiver 1203, and the network interface 1204 are connected, for example, by using a bus. In this embodiment of this application, the connection may include various interfaces, transmission cables, buses, or the like. This is not limited in this embodiment. The antenna 1205 is connected to the transceiver 1203. The network interface 1204 is configured to enable the communication apparatus to communicate with another communication device through a communication link. For example, the network interface 1204 may include a network interface between the communication apparatus and a core network device, for example, an S1 interface, or the network interface may include a network interface between the communication apparatus and another communication apparatus (for example, another radio access network or core network device), for example, an X2 or Xn interface.

The processor 1201 is mainly configured to: process a communication protocol and communication data, control the entire communication apparatus, execute a software program, and process data of the software program, for example, support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1201 in FIG. 12. A person skilled in the art may understand that the baseband processor and the central processing unit may alternatively be processors independent of each other, which are interconnected by using a technology such as a bus. A person skilled in the art may understand that the terminal device may include a plurality of baseband processors to adapt to different network standards, the terminal device may include a plurality of central processing units to enhance a processing capability of the terminal device, and components of the terminal device may be connected by using various buses. The baseband processor may also be referred to as a baseband processing circuit or a baseband processing chip. The central processing unit may also be referred to as a central processing circuit or a central processing chip. The function of processing the communication protocol and the communication data may be built in the processor, or may be stored in the memory in a form of a software program, and the processor executes the software program to implement a baseband processing function.

The memory is mainly configured to store the software program and the data. The memory 1202 may exist independently, and is connected to the processor 1201. Optionally, the memory 1202 and the processor 1201 may be integrated together, for example, integrated into a chip. The memory 1202 can store program code for executing the technical solutions in embodiments of this application, and the processor 1201 controls the execution. The executed computer program code may also be considered as drivers of the processor 1201.

FIG. 12 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1203 may be configured to support receiving or sending of a radio frequency signal between the communication apparatus and a terminal, and the transceiver 1203 may be connected to the antenna 1205. The transceiver 1203 includes a transmitter Tx and a receiver Rx. Specifically, the one or more antennas 1205 may receive a radio frequency signal. The receiver Rx of the transceiver 1203 is configured to: receive the radio frequency signal from the antenna, convert the radio frequency signal into a digital baseband signal or a digital intermediate frequency signal, and provide the digital baseband signal or the digital intermediate frequency signal to the processor 1201, so that the processor 1201 performs further processing, for example, demodulation processing and decoding processing, on the digital baseband signal or the digital intermediate frequency signal. In addition, the transmitter Tx in the transceiver 1203 is further configured to: receive a modulated digital baseband signal or digital intermediate frequency signal from the processor 1201, convert the modulated digital baseband signal or digital intermediate frequency signal into a radio frequency signal, and send the radio frequency signal by using the one or more antennas 1205. Specifically, the receiver Rx may selectively perform one or more stages of down-mixing processing and analog-to-digital conversion processing on the radio frequency signal to obtain the digital baseband signal or the digital intermediate frequency signal. A sequence of the down-mixing processing and the analog-to-digital conversion processing is adjustable. The transmitter Tx may selectively perform one or more stages of up-mixing processing and digital-to-analog conversion processing on the modulated digital baseband signal or digital intermediate frequency signal, to obtain the radio frequency signal. A sequence of the up-mixing processing and the digital-to-analog conversion processing is adjustable. The digital baseband signal and the digital intermediate frequency signal may be collectively referred to as a digital signal.

The transceiver 1203 may also be referred to as a transceiver module, a transceiver machine, a transceiver apparatus, or the like. Optionally, a component configured to implement a receiving function in the transceiver module may be considered as a receiving unit, and a component configured to implement a sending function in the transceiver module may be considered as a sending unit. In other words, the transceiver module includes a receiving unit and a sending unit. The receiving unit may also be referred to as a receiver, an input port, a receive circuit, or the like. The sending unit may be referred to as a transmitter, a transmitter machine, a transmit circuit, or the like.

It should be noted that the communication apparatus 1200 shown in FIG. 12 may be specifically configured to implement steps implemented by the application server, the user plane function network element, the session management function network element, the policy management function network element, and/or the access network device in the foregoing method embodiments, and achieve technical effects corresponding to the application server, the user plane function network element, the session management function network element, the policy management function network element, and/or the access network device. For specific implementations of the communication apparatus 1200 shown in FIG. 12, refer to descriptions in the foregoing method embodiments. Details are not described herein again.

An embodiment of this application further provides a computer-readable storage medium storing one or more computer-executable instructions. When the computer-executable instructions are executed by a processor, the processor performs the method described in the possible implementations of the application server, the user plane function network element, the session management function network element, the policy management function network element, and/or the access network device in the foregoing embodiments.

An embodiment of this application further provides a computer program product (or referred to as a computer program) storing one or more computers. When the computer program product is executed by a processor, the processor performs the method in the possible implementations of the application server, the user plane function network element, the session management function network element, the policy management function network element, and/or the access network device.

An embodiment of this application further provides a chip system. The chip system includes at least one processor, configured to support a communication apparatus in implementing functions in the possible implementations of the foregoing communication apparatus. Optionally, the chip system further includes an interface circuit, and the interface circuit provides program instructions and/or data for the at least one processor. In a possible design, the chip system may further include a memory, and the memory is configured to store program instructions and data necessary for the communication apparatus. The chip system may include a chip, or may include a chip and another discrete device. The communication apparatus may be specifically the application server, the user plane function network element, the session management function network element, the policy management function network element, and/or the access network device in the foregoing method embodiments.

An embodiment of this application further provides a communication system. The communication system includes the application server, the user plane function network element, the session management function network element, the policy management function network element, and/or the access network device in any one of the foregoing embodiments.

In the several embodiments provided in this application, it should be understood that the disclosed system, apparatus, and method may be implemented in other manners. For example, the described apparatus embodiment is merely an example. For example, the unit division is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or other forms.

The units described as separate parts may or may not be physically separate, and parts displayed as units may or may not be physical units, that is, may be located in one place, or may be distributed on a plurality of network units. A part of or all the units may be selected based on an actual requirement to achieve objectives of the solutions of embodiments.

In addition, functional units in embodiments of this application may be integrated into one processing module, or each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or a contributing part, or all or a part of the technical solutions may be implemented in a form of a software product. The computer software product is stored in a storage medium and includes several instructions for instructing a computer device (which may be a personal computer, a server, a radio access network, or the like) to perform all or a part of steps of the method described in embodiments of this application. The storage medium includes various media that can store program code, such as a USB flash drive, a removable hard disk drive, a read-only memory (ROM, Read-Only Memory), a random access memory (RAM, Random Access Memory), a magnetic disk, or an optical disc.

## Claims

1. A delay control method, wherein the method is applied to a policy control function network element, and the method comprises:
receiving first information sent by an application server, wherein the first information indicates an end-to-end transmission delay requirement for a first data flow, and the end-to-end transmission delay requirement is a transmission delay requirement for data transmission between a first terminal device and a second terminal device; and
generating a policy and charging control PCC rule based on the first information, wherein the PCC rule indicates a QoS requirement for a first quality of service QoS flow and/or a QoS requirement for a second QoS flow,
the QoS requirement for the first QoS flow comprises an uplink transmission delay requirement for the first data flow from the first terminal device to a first user plane function network element, and
the QoS requirement for the second QoS flow comprises a downlink transmission delay requirement for the first data flow from a second user plane function network element to the second terminal device.

2. The method according to claim 1, wherein the PCC rule comprises:
first indication information, wherein the first indication information indicates the first terminal device to add, to a packet of the first data flow, first time information of the packet, and the first time information indicates time at which the first terminal device generates or sends the packet.

3. The method according to claim 1 or 2, wherein the PCC rule further comprises an end-to-end transmission delay budget for the first data flow, and the end-to-end transmission delay budget is a transmission delay budget for data transmission between the first terminal device and the second terminal device.

4. The method according to any one of claims 1 to 3, wherein the end-to-end transmission delay requirement for the first data flow comprises:
the uplink transmission delay requirement for the first data flow from the first terminal device to the first user plane function network element and the downlink transmission delay requirement for the first data flow from the second user plane function network element to the second terminal device.

5. The method according to any one of claims 1 to 4, wherein a sum of the uplink transmission delay requirement and the downlink transmission delay requirement is less than or equal to the end-to-end transmission delay requirement.

6. The method according to any one of claims 1 to 5, wherein the generating the policy and charging control PCC rule based on the first information comprises:
obtaining a first transmission delay value from the application server to the first user plane function network element and/or a second transmission delay value from the application server to the second user plane function network element; and
determining the QoS requirement for the first QoS flow and/or the QoS requirement for the second QoS flow based on the first information and the first transmission delay value and/or the second transmission delay value.

7. The method according to claim 6, wherein
a sum of the uplink transmission delay requirement, the first transmission delay value, the downlink transmission delay requirement, and the second transmission delay value is less than or equal to the end-to-end transmission delay requirement.

8. The method according to any one of claims 1 to 7, wherein the method further comprises:
sending a first subscription request, wherein the first subscription request is used to request provision of a first notification service, and the first notification service is sending a first notification message when a transmission delay of the first data flow is greater than or equal to a first threshold; and
receiving the first notification message, wherein the first notification message indicates that the transmission delay of the first data flow is greater than or equal to the first threshold.

9. The method according to claim 8, wherein the method further comprises:
updating the uplink transmission delay requirement for the first data flow and/or the downlink transmission delay requirement for the first data flow based on the first notification message.

10. The method according to claim 9, comprising:
determining a target transmission delay requirement combination from a transmission delay requirement set, wherein the transmission delay requirement set comprises one or more transmission delay requirement combinations, and each transmission delay requirement combination comprises uplink transmission delay requirement and/or downlink transmission delay requirement; and
updating the uplink transmission delay requirement for the first data flow and/or the downlink transmission delay requirement for the first data flow based on the target transmission delay requirement combination.

11. The method according to any one of claims 1 to 10, wherein the method further comprises:
sending the transmission delay requirement set, wherein the transmission delay requirement set comprises one or more transmission delay requirement combinations, and each transmission delay requirement combination comprises the uplink transmission delay requirement and/or the downlink transmission delay requirement;
receiving a second notification message, wherein the second notification message indicates a target transmission delay requirement combination, and the target transmission delay requirement combination belongs to the one or more transmission delay requirement combinations comprised in the transmission delay requirement set; and
updating the uplink transmission delay requirement for the first data flow and/or the downlink transmission delay requirement for the first data flow based on the second notification message.

12. The method according to claim 11, wherein the method further comprises:
sending a second subscription request, wherein the second subscription request is used to request the application server to provide a second notification service, and the second notification service is sending, by the application server, the second notification message after determining the target transmission delay requirement from the transmission delay requirement set.

13. The method according to any one of claims 8 to 12, wherein the method further comprises:
updating the QoS requirement for the first QoS flow and/or the QoS requirement for the second QoS flow based on an updated uplink transmission delay requirement for the first data flow and/or an updated downlink transmission delay requirement for the first data flow.

14. The method according to any one of claims 8 to 13, wherein the first subscription request further comprises: description information of the first data flow and/or the first threshold.

15. A delay control method, wherein the method is applied to an application server or an application function network element, and the method comprises:
sending first information, wherein the first information indicates an end-to-end transmission delay requirement for a first data flow, the end-to-end transmission delay requirement is a transmission delay requirement for data transmission between a first terminal device and a second terminal device, and the end-to-end transmission delay requirement is used by a wireless communication network to determine a transmission delay requirement of the wireless communication network from the first terminal device to the second terminal device.

16. The method according to claim 15, wherein the first information further comprises description information of the first data flow, and the description information of the first data flow comprises any one or more pieces of the following information: a source internet protocol IP address of the first data flow, a destination IP address of the first data flow, a source port of the first data flow, a destination port of the first data flow, transport layer protocol information of the first data flow, a queue pair of the first data flow, a service type of the first data flow, or a port index of the first data flow.

17. The method according to claim 15 or 16, wherein the first information comprises an end-to-end transmission delay for the first data flow, and the end-to-end transmission delay for the first data flow indicates an upper transmission time limit value for a packet in the first data flow.

18. The method according to any one of claims 15 to 17, wherein the method further comprises:
obtaining first time information, wherein the first time information indicates time at which the first terminal device generates or sends a first packet, and the first packet is carried in the first data flow; and/or
obtaining second time information, wherein the second time information indicates time at which the application server receives the first packet, or the second time information indicates time at which the application server sends the first packet to the second terminal device.

19. The method according to claim 18, wherein the method further comprises:
receiving a transmission delay requirement set sent by a policy management function PCF, wherein the transmission delay requirement set comprises one or more transmission delay requirement combinations, and each transmission delay requirement combination comprises the uplink transmission delay requirement and/or the downlink transmission delay requirement;
determining a target transmission delay requirement combination from the transmission delay requirement set based on the first time information and/or the second time information, wherein the target transmission delay requirement combination belongs to the transmission delay requirement set; and
updating the end-to-end transmission delay requirement based on the target transmission delay requirement combination.

20. The method according to claim 19, wherein the updating the end-to-end transmission delay requirement based on the target transmission delay requirement combination comprises:
sending a second notification message to the policy management function, wherein the second notification message indicates the target transmission delay requirement combination.

21. The method according to any one of claims 15 to 20, wherein the method further comprises:
receiving a first subscription request sent by the policy management function network element, wherein the first subscription request is used to request provision of a first notification service, and the first notification service is sending a first notification message when a transmission delay of the first data flow is greater than or equal to a first threshold;
obtaining the first time information, wherein the first time information indicates the time at which the first terminal device generates or sends the first packet, and the first packet is carried in the first data flow; and/or obtaining the second time information, wherein the second time information indicates the time at which the application server receives the first packet, or the second time information indicates the time at which the application server sends the first packet to the second terminal device; and
determining, based on the first time information and/or the second time information and the first threshold, whether to send the first notification message to the policy management function network element.

22. The method according to any one of claims 18 to 21, wherein the obtaining the first time information comprises:
receiving the first packet, wherein the first packet is carried in the first data flow; and
obtaining the first time information from the first packet.

23. The method according to any one of claims 15 to 22, wherein the method further comprises:
receiving the first packet sent by the first terminal device, wherein the first packet is carried in the first data flow; and
sending the first packet to which the first time information is added to the second terminal device, wherein the first time information indicates the time at which the first terminal device generates or sends the first packet.

24. A delay control method, wherein the method is applied to a session management function network element, and the method comprises:
receiving a policy and charging control PCC rule;
obtaining third information according to the PCC rule, wherein the third information comprises a QoS requirement for a first quality of service QoS flow and/or a QoS requirement for a second QoS flow, wherein the QoS requirement for the first QoS flow comprises an uplink transmission delay requirement for first data flow from the first terminal device to a first user plane function network element, and
the QoS requirement for the second QoS flow comprises a downlink transmission delay requirement for the first data flow from a second user plane function network element to the second terminal device; and
sending the third information.

25. The method according to claim 24, wherein the sending the third information comprises:
sending the third information to the first terminal device, wherein the third information comprises first indication information, wherein
the first indication information indicates the first terminal device to add, to a packet transmitted in the first data flow, information about time at which the first terminal device sends or generates the packet.

26. The method according to claim 24, wherein a QoS rule for the first QoS flow comprises first indication information, and the first indication information indicates the first terminal device to add, to a packet transmitted in the first QoS flow, time at which the first terminal device sends or generates the packet.

27. The method according to any one of claims 24 to 26, wherein the sending the third information comprises:
sending the third information to an access network device, wherein the third information comprises an end-to-end transmission delay for the first data flow, the end-to-end transmission delay for the first data flow indicates an upper transmission time limit value for a packet in the first data flow, and the access network device provides a communication service for the second terminal device.

28. The method according to any one of claims 24 to 27, wherein the sending the third information comprises:
sending the third information to the access network device, wherein the third information comprises a QoS parameter of the first QoS flow and/or a QoS parameter of the second QoS flow, wherein
the QoS parameter of the first QoS flow comprises the uplink transmission delay requirement for the first data flow from the first terminal device to the first user plane function network element, and
the QoS parameter of the second QoS flow comprises the downlink transmission delay requirement for the first data flow from the second user plane function network element to the second terminal device.

29. The method according to any one of claims 24 to 27, wherein the sending the third information comprises:
sending the third information to the user plane function network element, wherein the third information comprises a packet detection rule for the first data flow and/or a QoS enforcement rule for the first data flow, and the QoS enforcement rule for the first data flow indicates the user plane function network element to add, to a packet of the first data flow, time at which the first terminal device generates or sends the packet.

30. A delay control method, wherein the method is applied to an access network device, and the method comprises:
receiving a packet of the first data flow, wherein the packet comprises information indicating time at which a first terminal device generates or sends the packet; and
sending the packet to second terminal device based on an end-to-end transmission delay requirement for the first data flow and the time information of the packet, wherein the end-to-end transmission delay requirement for the first data flow is a transmission delay requirement for data transmission between the first terminal device and the second terminal device.

31. The method according to claim 30, wherein the method further comprises:
receiving third information sent by a session management function network element, wherein the third information comprises the end-to-end transmission delay requirement for the first data flow.

32. The method according to claim 30 or 31, wherein the method further comprises:
determining a first time period of the packet based on the first time information of the packet and receiving time at which the access network device receives the packet, wherein the first time period indicates a transmission time of transmitting the packet from the first terminal device to the access network device;
determining a sending delay budget for the packet based on the end-to-end transmission delay requirement for the first data flow and the first time period of the packet; and
sending the packet to the second terminal device within the sending delay budget for the packet.

33. The method according to claim 32, wherein the method further comprises:
determining the first time period of the packet based on the first time information of the packet and the receiving time at which the access network device receives the packet, wherein the first time period indicates the transmission time of transmitting the packet from the first terminal device to the access network device; and
determining the sending delay budget for the packet based on the end-to-end transmission delay requirement for the first data flow and the first time period of the packet.

34. The method according to claim 32, wherein the determining the sending delay budget for the packet based on the end-to-end transmission delay for the first data flow and the first time period of the packet comprises:
obtaining an air interface transmission delay from the access network device to the second terminal device; and
determining the sending delay budget for the packet based on the end-to-end transmission delay requirement for the first data flow, the air interface transmission delay from the access network device to the second terminal device, and the first time information of the packet.

35. The method according to any one of claims 32 to 34, wherein the sending the packet to the second terminal device within the sending delay budget for the packet comprises:
preferentially sending packet with low sending delay budget to the second terminal device.

36. A communication apparatus, comprising a transceiver module and a processing module, wherein
the transceiver module is configured to input and/or output signaling or data; and
the processing module is configured to perform, by using a communication unit, the method according to any one of claims 1 to 14, the method according to any one of claims 15 to 23, the method according to any one of claims 24 to 29, or the method according to any one of claims 30 to 35.

37. A communication apparatus, comprising a communication interface and a processor, wherein
the communication interface is configured to input and/or output signaling or data; and
the processor is configured to execute a computer-executable program, to perform the method according to any one of claims 1 to 14, the method according to any one of claims 15 to 23, the method according to any one of claims 24 to 29, or the method according to any one of claims 30 to 35.

38. A communication apparatus, comprising a processor and a memory, wherein
the memory is configured to store a computer program or instructions; and
the processor is configured to execute the computer program or the instructions in the memory, to perform the method according to any one of claims 1 to 14, the method according to any one of claims 15 to 23, the method according to any one of claims 24 to 29, or the method according to any one of claims 30 to 35.

39. A computer-readable storage medium, comprising instructions, wherein when the instructions are executed by a processor, the method according to any one of claims 1 to 14, the method according to any one of claims 15 to 23, the method according to any one of claims 24 to 29, or the method according to any one of claims 30 to 35 is implemented.

40. A computer program product, comprising a program, wherein when the program is executed by a processor, the method according to any one of claims 1 to 14, the method according to any one of claims 15 to 23, the method according to any one of claims 24 to 29, or the method according to any one of claims 30 to 35 is implemented.

41. A chip system, wherein the chip system comprises at least one processor, and when program instructions are executed in the at least one processor, the method according to any one of claims 1 to 14, the method according to any one of claims 15 to 23, the method according to any one of claims 24 to 29, or the method according to any one of claims 30 to 35 is implemented.

42. A communication system, comprising a communication apparatus configured to perform the method according to any one of claims 1 to 14, a communication apparatus configured to perform the method according to any one of claims 15 to 23, a communication apparatus configured to perform the method according to any one of claims 24 to 29, and a communication apparatus configured to perform the method according to any one of claims 30 to 35.
